# EUROPEAN PATENT APPLICATION

(11) **EP 4 171 148 A1**
(43) Date of publication of application: **26.04.2023**
(21) Application number: 20943090.9
(22) Date of filing: 03.07.2020
(51) Int. Cl.: H04W 72/12

(54) **COMMUNICATION METHOD AND APPARATUS**

(71) Applicant: Huawei Technologies Co., Ltd., Shenzhen, Guangdong 518129 (CN)
(72) Inventor: LIU, Hang, Shenzhen, Guangdong 518129 (CN); YANG, Changqing, Shenzhen, Guangdong 518129 (CN)
(74) Representative: Gill Jennings & Every LLP
(86) International application number: PCT/CN2020/100285
(87) International publication number: WO 2022/000513

(57) **Abstract**

Embodiments of this application relate to the field of communications technologies, and provide a communications method and apparatus. This can improve data transmission efficiency, and may be used for assisted driving and autonomous driving. The method includes: receiving first indication information sent by a network device, where the first indication information is used to indicate a first time-frequency resource; generating first data based on a resource attribute of the first time-frequency resource, where the first data includes data of at least one logical channel; and sending the first data to the network device on the first time-frequency resource. The method may be applied to the internet of vehicles, for example, vehicle-to-everything V2X, long term evolution-vehicle LTE-V, and vehicle-to-vehicle V2V.

## Description

### TECHNICAL FIELD

Embodiments of this application relate to the field of communications technologies, and in particular, to a communications method and apparatus.

### BACKGROUND

In a process of transmitting data by using a wireless communications technology, data of at least one logical channel is encapsulated in one media access control protocol data unit (media access control protocol data unit, MAC PDU) at a media access control (media access control, MAC) layer.

Usually, when data of a logical channel is encapsulated, data of a plurality of logical channels is sequentially encapsulated in one MAC PDU based on priorities of the logical channels, and the MAC PDU includes packet header information.

However, with continuous development of communications technologies, service types are increasingly diversified. For example, in an intelligent cockpit environment, services such as audio, videos, and active noise reduction exist. Correspondingly, data types of logical channels are also diversified. For data of a small-packet service (for example, an active noise reduction service), using a logical channel priority-based encapsulation mechanism greatly increases data encapsulation overheads, resulting in low system transmission efficiency.

### SUMMARY

Embodiments of this application provide a communications method and apparatus, to improve data transmission efficiency.

To achieve the foregoing objective, the following technical solutions are used in embodiments of this application.

According to a first aspect, an embodiment of this application provides a communications method, including: receiving first indication information sent by a network device, where the first indication information is used to indicate a first time-frequency resource; generating first data based on a resource attribute of the first time-frequency resource, where the first data includes data of at least one logical channel; and sending the first data to the network device on the first time-frequency resource.

According to the communications method provided in this embodiment of this application, a terminal encapsulates data of a logical channel based on the resource attribute of the first time-frequency resource. Different resource attributes of the first time-frequency resource indicate different encapsulation manners of the data of the logical channel, that is, different data formats of the first data. In this way, the data of the logical channel can be flexibly encapsulated to generate the first data, and then the first data is sent on the first time-frequency resource, so that data transmission efficiency can be improved.

In a possible implementation, before the generating first data based on a resource attribute of the first time-frequency resource, the communications method provided in this embodiment of this application further includes: determining the resource attribute of the first time-frequency resource based on the first indication information, where the resource attribute of the first time-frequency resource includes that the first time-frequency resource is a semi-persistent time-frequency resource or the first time-frequency resource is a dynamic time-frequency resource.

Optionally, the first indication information may be carried in RRC signaling, and the RRC signaling includes system information (system information). Alternatively, the first indication information may be carried on a PCCH, for example, downlink control indicator DCI. Alternatively, the first indication information may be carried in a management frame (management frame), and the management frame is used to perform management functions such as resource configuration and connection management between the terminal (including a vehicle-mounted device) and the network device. Different from the management frame, a data frame is mainly used to carry traffic data.

In this embodiment of this application, the first indication information includes different types of indication information, and the different types of indication information may be sent by using different messages. For example, the first indication information may be semi-persistent resource configuration information. In this case, the first time-frequency resource indicated by the first indication information is the semi-persistent time-frequency resource. Alternatively, the first indication information may be dynamic resource configuration information. In this case, the first time-frequency resource indicated by the first indication information is the dynamic time-frequency resource.

In another feasible implementation, the first indication information is used to perform resource configuration, the first indication information may carry first element information, and the first element information is used to indicate whether a time-frequency resource is a dynamic time-frequency resource or a semi-persistent time-frequency resource. For example, one bit in a DCI is used for indication, where 0 indicates a dynamic scheduling resource, and 1 indicates a semi-persistent scheduling resource.

In a possible implementation, the resource attribute of the first time-frequency resource includes that the first time-frequency resource is the semi-persistent time-frequency resource, and the first data does not include packet header information. That is, when the terminal performs data encapsulation, no packet header is added to a MAC PDU formed through encapsulation. In this embodiment of this application, the MAC PDU does not include the packet header. In this way, overheads of transmitting the MAC PDU can be reduced, and data transmission efficiency can be improved.

The semi-persistent time-frequency resource is used by the terminal to periodically transmit data. To be specific, a time-frequency resource used for a plurality of times of data transmission is indicated to the terminal by using one piece of indication information. Usually, semi-persistent time-frequency resources are periodic in time domain, and are the same in frequency domain. In addition, a size of a time-frequency resource (that is, a resource quantity of the time-frequency resource) used for each data transmission is usually fixed. During each data transmission, the terminal sends data on a currently configured time-frequency resource.

Optionally, the MAC PDU is the same as a MAC SDU (data of one logical channel is denoted as one MAC SDU). Alternatively, the MAC PDU does not include a packet header, and a CRC code of a fixed bit is added to a tail of the MAC PDU. Alternatively, the MAC PDU does not include a packet header, and padding of a specific length is added to a tail of the MAC PDU, to form an entire byte.

In a possible implementation, the first data includes data of only a first logical channel.

In a possible implementation, the resource attribute of the first time-frequency resource includes that the first time-frequency resource is the dynamic time-frequency resource, and the first data includes packet header information. That is, when the terminal performs data encapsulation, a packet header needs to be added to a MAC PDU formed through encapsulation. The MAC PDU includes data of one or more logical channels.

The dynamic time-frequency resource is used by the terminal to transmit data for a single time. To be specific, when the terminal needs to send data next time, the network device reallocates a time-frequency resource to the terminal, and indicates the time-frequency resource to the terminal. Usually, because the time-frequency resource is dynamically scheduled by the network device, a time-frequency location and a size of a dynamic time-frequency resource for each data transmission are variable.

Optionally, when the first time-frequency resource is a dynamic time-frequency resource, and the first data (MAC PDU) includes data of a plurality of logical channels, that is, when the data of the plurality of logical channels is encapsulated in one MAC PDU, a packet header of the MAC PDU includes sub-headers corresponding to respective MAC SDUs of the plurality of logical channels.

When the data of the plurality of logical channels is encapsulated in one MAC PDU, a method for encapsulating the data of the plurality of logical channels includes: encapsulating the data of the plurality of logical channels based on respective logical channel priorities and respective PBRs of the plurality of logical channels. The priority of the logical channel is used to indicate a data encapsulation rank of the logical channel, and the PBR is used to indicate a data amount of data encapsulated at a single time corresponding to the logical channel. Optionally, a PBR of a single logical channel may be set to infinity.

Optionally, the priority and the PBR of the logical channel may be agreed on in a protocol, or may be configured by the network device for the terminal in a logical channel establishment process. This is not limited in this embodiment of this application.

In a possible implementation, before the generating first data based on a resource attribute of the first time-frequency resource, the data forwarding method provided in this embodiment of this application further includes: receiving second indication information, where the second indication information is used to indicate the resource attribute of the first time-frequency resource, and the resource attribute of the first time-frequency resource includes that the first time-frequency resource is a transparent transmission resource or the first time-frequency resource is a non-transparent transmission resource.

The second indication information may be carried in RRC signaling, a PCCH, or a management frame. Optionally, the first indication information and the second indication information may be carried in same RRC signaling, or may be carried in different RRC signaling. This is not specifically limited in this embodiment of this application. In a possible implementation, the first indication information is carried in RRC signaling, and the second indication information is carried on a PCCH.

Optionally, in this embodiment of this application, there is a correspondence between second indication information and first indication information. For example, when the first indication information indicates that the first time-frequency resource is the semi-persistent resource, the second indication information indicates that the first time-frequency resource is the transparent transmission resource. The correspondence between second indication information and first indication information may be implicit or explicit.

In this embodiment of this application, the transparent transmission resource and the non-transparent transmission resource are defined based on a characteristic of data transmitted by using a resource. For example, a resource used to transmit data whose transmission mode is a transparent transmission mode is defined as the transparent transmission resource, and a resource used to transmit data whose transmission mode is a non-transparent transmission mode is defined as the non-transparent transmission resource. Alternatively, for example, a resource used to transmit data whose service type is an active noise reduction service is defined as the transparent transmission resource, and a resource used to transmit data of a service other than the active noise reduction service is defined as the non-transparent transmission resource.

In a possible implementation, the resource attribute of the first time-frequency resource includes that the first time-frequency resource is the transparent transmission resource, and the first data does not include packet header information.

In a possible implementation, the first data includes data of only a first logical channel.

In a possible implementation, the resource attribute of the first time-frequency resource includes that the first time-frequency resource is the non-transparent transmission resource, and the first data includes packet header information.

In a possible implementation, a service corresponding to the data of the first logical channel is a service transmitted at a MAC layer in a transparent transmission mode.

In a possible implementation, the data of the first logical channel includes data corresponding to an active noise reduction service.

In this embodiment of this application, the terminal may perform data encapsulation based on the resource attribute of the first time-frequency resource. When the first time-frequency resource is the semi-persistent resource or the transparent transmission resource, for the data transmitted at the MAC layer in the transparent transmission mode or the data of the active noise reduction service, the terminal encapsulates data that is of a logical channel and that corresponds to the service in a single MAC PDU, and the MAC PDU does not include packet header information. In this way, overheads of transmitting the data transmitted in the transparent transmission mode or the data of the active noise reduction service can be effectively reduced, and data transmission efficiency can be improved.

In a possible implementation, before the generating first data based on a resource attribute of the first time-frequency resource, the communications method provided in this embodiment of this application further includes: receiving logical channel configuration information from the network device, where the logical channel configuration information includes at least one of QoS information or service type information corresponding to one or more logical channels.

It should be noted that the one or more logical channels are logical channels established by the network device for the terminal. A concept of the one or more logical channels herein is different from a concept of the at least one logical channel corresponding to the first data, and the at least one logical channel corresponding to the first data is one or more of the logical channels established by the network device for the terminal.

In a logical channel establishment phase, the terminal may report information such as a service type of the terminal to the network device, so that the network device creates a logical channel for the terminal, and sends logical channel configuration information to the terminal. When the logical channel configuration information includes a plurality of types of information in the foregoing three types of information, there is a correspondence between the plurality of types of information.

In this embodiment of this application, the logical channel identifier is used to uniquely identify a logical channel, and the QoS information is used to indicate a QoS requirement or requirement of data of a logical channel. For example, the QoS requirement or requirement may include but is not limited to one or more of a priority (priority) of data, reliability (reliability) of data, a transmission rate (data rate) of data, a transmission latency (latency) of data, and a communication range (range) of data. Optionally, the QoS information may be a QoS class index QCI or a QoS flow identifier (QoS flow ID). This is not limited in this embodiment of this application. Optionally, a correspondence between a QCI or a QoS flow ID and a corresponding QoS requirement or requirement may be agreed on in a protocol. The service type information is used to indicate a service type of data of a logical channel. Optionally, service types may be distinguished based on an application identifier (application ID, AID). For example, an AID of an active noise reduction service is 1, and an AID of a video service is 2.

In a possible implementation, the communications method provided in this embodiment of this application further includes: determining, based on the at least one of the quality of service QoS information or the service type information corresponding to the one or more logical channels, whether a service corresponding to data of the one or more logical channels is the service transmitted at the MAC layer in the transparent transmission mode.

Optionally, a protocol specifies which services corresponding to the QoS information are in a transparent transmission mode and/or which services corresponding to the service type information are in a transparent transmission mode. One logical channel is used as an example. After receiving the logical channel configuration information, the terminal determines, based on QoS information of the logical channel, whether the QoS information is QoS information corresponding to a service that is in a transparent transmission mode and that is specified in the protocol. If the QoS information is the QoS information corresponding to the service that is in the transparent transmission mode and that is specified in the protocol, the terminal determines that a service corresponding to data of the logical channel is the service transmitted at the MAC layer in the transparent transmission mode; or if the QoS information is not the QoS information corresponding to the service that is in the transparent transmission mode and that is specified in the protocol, the terminal determines that a service corresponding to data of the logical channel is not the service transmitted at the MAC layer in the transparent transmission mode. Similarly, the terminal determines, based on service type information of the logical channel, whether a service corresponding to data of the logical channel is the service transmitted at the MAC layer in the transparent transmission mode.

In a possible implementation, the one or more logical channels include a second logical channel. The resource attribute of the first time-frequency resource includes that the first time-frequency resource is the semi-persistent time-frequency resource, and when a service corresponding to data of the second logical channel is the service transmitted at the MAC layer in the transparent transmission mode, the first data includes the data of the second logical channel, and the first data does not include the packet header information. Alternatively, the resource attribute of the first time-frequency resource includes that the first time-frequency resource is the transparent transmission resource, and when a service corresponding to data of the second logical channel is the service transmitted at the MAC layer in the transparent transmission mode, the first data includes the data of the second logical channel, and the first data does not include the packet header information.

In this embodiment of this application, when the terminal performs data encapsulation based on the resource attribute of the first time-frequency resource, the terminal may determine, based on the QoS information corresponding to the logical channel and/or the service type information corresponding to the logical channel, whether the service corresponding to the data of the logical channel is the service transmitted at the MAC layer in the transparent transmission mode. When the first time-frequency resource is the semi-persistent resource or the transparent transmission resource, for a logical channel corresponding to the service transmitted at the MAC layer in the transparent transmission mode, the terminal encapsulates data of the logical channel in a single MAC PDU, and the MAC PDU does not include packet header information. In this way, for services of different QoS or services of different types, quality of service of the services can be ensured, and data transmission efficiency can be improved.

In a possible implementation, the one or more logical channels include a second logical channel. The resource attribute of the first time-frequency resource includes that the first time-frequency resource is the dynamic time-frequency resource, and when a service corresponding to data of the second logical channel is not the service transmitted at the MAC layer in the transparent transmission mode, the first data includes the data of the second logical channel, and the first data includes the packet header information. Alternatively, the resource attribute of the first time-frequency resource includes that the first time-frequency resource is the non-transparent transmission time-frequency resource, and when a service corresponding to data of the second logical channel is not the service transmitted at the MAC layer in the transparent transmission mode, the first data includes the data of the second logical channel, and the first data includes the packet header information.

In a possible implementation, the logical channel configuration information further includes at least one of data encapsulation attribute information or data transmission attribute information corresponding to the one or more logical channels. Data encapsulation attribute information corresponding to each logical channel is used to indicate whether data of the logical channel and data of another logical channel are allowed to be encapsulated in a single MAC PDU, and data transmission attribute information corresponding to each logical channel is used to indicate whether a transmission mode of data of the logical channel is a transparent transmission mode or a non-transparent transmission mode.

In a possible implementation, the one or more logical channels include a third logical channel, and the resource attribute of the first time-frequency resource includes that the first time-frequency resource is the semi-persistent time-frequency resource; and when data encapsulation attribute information corresponding to the third logical channel indicates that data of the third logical channel and data of another logical channel are not allowed to be encapsulated in a single MAC PDU, the first data includes the data of only the third logical channel, and the first data does not include the packet header information; and/or when data transmission attribute information corresponding to the third logical channel indicates that a transmission mode of the data of the third logical channel is a transparent transmission mode, the first data includes the data of only the third logical channel, and the first data does not include the packet header information.

In a possible implementation, the resource attribute of the first time-frequency resource includes that the first time-frequency resource is the dynamic time-frequency resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information.

In a possible implementation, the one or more logical channels include the second logical channel, and the resource attribute of the first time-frequency resource includes that the first time-frequency resource is the transparent transmission resource; and when data encapsulation attribute information of the second logical channel indicates that the data of the second logical channel and data of another logical channel are not allowed to be encapsulated in a single MAC PDU, the first data includes the data of only the second logical channel, and the first data does not include the packet header information; and/or when data transmission attribute information of the second logical channel indicates that a transmission mode of the data of the second logical channel is a transparent transmission mode, the first data includes the data of only the second logical channel, and the first data does not include the packet header information.

In a possible implementation, the resource attribute of the first time-frequency resource includes that the first time-frequency resource is the non-transparent transmission resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data transmission attribute information corresponding to each of the at least one logical channel indicates that a transmission mode of data of the logical channel is a non-transparent transmission mode, the first data includes the data of the at least one logical channel, and the first data includes the packet header information.

In this embodiment of this application, for a logical channel whose data encapsulation attribute is that data of one logical channel and data of another logical channel are not allowed to be encapsulated in a single MAC PDU, and/or for a logical channel whose logical channel attribute is that a data transmission mode is a transparent transmission mode, the terminal encapsulates data of the logical channel in a single MAC PDU, and the MAC PDU does not include packet header information. In this way, overheads of transmitting data of a logical channel with a specific channel attribute can be effectively reduced, and data transmission efficiency can be improved.

In a possible implementation, before the generating first data based on a resource attribute of the first time-frequency resource, the communications method provided in this embodiment of this application further includes: receiving logical channel configuration information from the network device, where the logical channel configuration information includes at least one of a logical channel identifier, quality of service QoS information, or service type information corresponding to the at least one logical channel; and receiving third indication information, where the third indication information is used to indicate the resource attribute of the first time-frequency resource, and the resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource.

If the resource attribute of the first time-frequency resource includes the logical channel identifier corresponding to the first time-frequency resource, the first data includes data of only a second logical channel, and the first data does not include packet header information. The second logical channel is a logical channel indicated by the logical channel identifier corresponding to the first time-frequency resource, and one or more logical channels include the second logical channel.

If the resource attribute of the first time-frequency resource includes the QoS information of the transmitted logical channel corresponding to the first time-frequency resource, the first data includes data of only a second logical channel, and the first data does not include packet header information. The second logical channel is a logical channel indicated by the QoS information of the transmitted logical channel corresponding to the first time-frequency resource.

If the resource attribute of the first time-frequency resource includes the service type information of the transmitted logical channel corresponding to the first time-frequency resource, the first data includes data of only a second logical channel, and the first data does not include packet header information. The second logical channel is a logical channel indicated by the service type information of the transmitted logical channel corresponding to the first time-frequency resource.

In this embodiment of this application, for a logical channel indicated by at least one of the logical channel identifier corresponding to the first time-frequency resource, the QoS information of the transmitted logical channel corresponding to the first time-frequency resource, or the service type information of the transmitted logical channel corresponding to the first time-frequency resource, the terminal encapsulates data of the logical channel in a single MAC PDU, and the MAC PDU does not include packet header information. In this way, overheads of transmitting data of a logical channel with a specific characteristic can be effectively reduced, and data transmission efficiency can be improved.

According to a second aspect, an embodiment of this application provides a communications apparatus, including a receiving module, a generation module, and a sending module. The receiving module is configured to receive first indication information sent by a network device, where the first indication information is used to indicate a first time-frequency resource. The generation module is configured to generate first data based on a resource attribute of the first time-frequency resource, where the first data includes data of at least one logical channel. The sending module is configured to send the first data to the network device on the first time-frequency resource.

In a possible implementation, the communications apparatus provided in this embodiment of this application further includes a determining module. The determining module is configured to determine the resource attribute of the first time-frequency resource based on the first indication information, where the resource attribute of the first time-frequency resource includes that the first time-frequency resource is a semi-persistent time-frequency resource or the first time-frequency resource is a dynamic time-frequency resource.

In a possible implementation, the resource attribute of the first time-frequency resource includes that the first time-frequency resource is the semi-persistent time-frequency resource, and the first data does not include packet header information.

In a possible implementation, the first data includes data of only a first logical channel.

In a possible implementation, the resource attribute of the first time-frequency resource includes that the first time-frequency resource is the dynamic time-frequency resource, and the first data includes packet header information.

In a possible implementation, the receiving module is further configured to receive second indication information, where the second indication information is used to indicate the resource attribute of the first time-frequency resource, and the resource attribute of the first time-frequency resource includes that the first time-frequency resource is a transparent transmission resource or the first time-frequency resource is a non-transparent transmission resource.

In a possible implementation, the resource attribute of the first time-frequency resource includes that the first time-frequency resource is the transparent transmission resource, and the first data does not include packet header information.

In a possible implementation, the first data includes data of only a first logical channel.

In a possible implementation, the resource attribute of the first time-frequency resource includes that the first time-frequency resource is the non-transparent transmission resource, and the first data includes packet header information.

In a possible implementation, a service corresponding to the data of the first logical channel is a service transmitted at a MAC layer in a transparent transmission mode.

In a possible implementation, the data of the first logical channel includes data corresponding to an active noise reduction service.

In a possible implementation, the receiving module is further configured to receive logical channel configuration information from the network device, where the logical channel configuration information includes at least one of quality of service QoS information or service type information corresponding to one or more logical channels.

In a possible implementation, the determining module is further configured to determine, based on the at least one of the quality of service QoS information or the service type information corresponding to the one or more logical channels, whether a service corresponding to data of the one or more logical channels is the service transmitted at the MAC layer in the transparent transmission mode.

In a possible implementation, the one or more logical channels include a second logical channel. The resource attribute of the first time-frequency resource includes that the first time-frequency resource is the semi-persistent time-frequency resource, and when a service corresponding to data of the second logical channel is the service transmitted at the MAC layer in the transparent transmission mode, the first data includes the data of the second logical channel, and the first data does not include the packet header information. Alternatively, the resource attribute of the first time-frequency resource includes that the first time-frequency resource is the transparent transmission resource, and when a service corresponding to data of the second logical channel is the service transmitted at the MAC layer in the transparent transmission mode, the first data includes the data of the second logical channel, and the first data does not include the packet header information.

In a possible implementation, the one or more logical channels include a second logical channel. The resource attribute of the first time-frequency resource includes that the first time-frequency resource is the dynamic time-frequency resource, and when a service corresponding to data of the second logical channel is not the service transmitted at the MAC layer in the transparent transmission mode, the first data includes the data of the second logical channel, and the first data includes the packet header information. Alternatively, the resource attribute of the first time-frequency resource includes that the first time-frequency resource is the non-transparent transmission time-frequency resource, and when a service corresponding to data of the second logical channel is not the service transmitted at the MAC layer in the transparent transmission mode, the first data includes the data of the second logical channel, and the first data includes the packet header information.

In a possible implementation, the logical channel configuration information further includes at least one of data encapsulation attribute information or data transmission attribute information corresponding to the one or more logical channels. Data encapsulation attribute information corresponding to each logical channel is used to indicate whether data of the logical channel and data of another logical channel are allowed to be encapsulated in a single MAC PDU, and data transmission attribute information corresponding to each logical channel is used to indicate whether a transmission mode of data of the logical channel is a transparent transmission mode or a non-transparent transmission mode.

In a possible implementation, the one or more logical channels include a third logical channel, and the resource attribute of the first time-frequency resource includes that the first time-frequency resource is the semi-persistent time-frequency resource; and when data encapsulation attribute information corresponding to the third logical channel indicates that data of the third logical channel and data of another logical channel are not allowed to be encapsulated in a single MAC PDU, the first data includes the data of only the third logical channel, and the first data does not include the packet header information; and/or when data transmission attribute information corresponding to the third logical channel indicates that a transmission mode of the data of the third logical channel is a transparent transmission mode, the first data includes the data of only the third logical channel, and the first data does not include the packet header information.

In a possible implementation, the resource attribute of the first time-frequency resource includes that the first time-frequency resource is the dynamic time-frequency resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information.

In a possible implementation, the one or more logical channels include the second logical channel, and the resource attribute of the first time-frequency resource includes that the first time-frequency resource is the transparent transmission resource; and when data encapsulation attribute information of the second logical channel indicates that the data of the second logical channel and data of another logical channel are not allowed to be encapsulated in a single MAC PDU, the first data includes the data of only the second logical channel, and the first data does not include the packet header information; and/or when data transmission attribute information of the second logical channel indicates that a transmission mode of the data of the second logical channel is a transparent transmission mode, the first data includes the data of only the second logical channel, and the first data does not include the packet header information.

In a possible implementation, the resource attribute of the first time-frequency resource includes that the first time-frequency resource is the non-transparent transmission resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data transmission attribute information corresponding to each of the at least one logical channel indicates that a transmission mode of data of the logical channel is a non-transparent transmission mode, the first data includes the data of the at least one logical channel, and the first data includes the packet header information.

In a possible implementation, the receiving module is further configured to receive logical channel configuration information from the network device, where the logical channel configuration information includes at least one of a logical channel identifier, quality of service QoS information, or service type information corresponding to the at least one logical channel. The receiving module is further configured to receive third indication information, where the third indication information is used to indicate the resource attribute of the first time-frequency resource, and the resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource.

If the resource attribute of the first time-frequency resource includes the logical channel identifier corresponding to the first time-frequency resource, the first data includes data of only a second logical channel, and the first data does not include packet header information. The second logical channel is a logical channel indicated by the logical channel identifier corresponding to the first time-frequency resource, and one or more logical channels include the second logical channel.

If the resource attribute of the first time-frequency resource includes the QoS information of the transmitted logical channel corresponding to the first time-frequency resource, the first data includes data of only a second logical channel, and the first data does not include packet header information. The second logical channel is a logical channel indicated by the QoS information of the transmitted logical channel corresponding to the first time-frequency resource, and the one or more logical channels include the second logical channel.

If the resource attribute of the first time-frequency resource includes the service type information of the transmitted logical channel corresponding to the first time-frequency resource, the first data includes data of only a second logical channel, and the first data does not include packet header information. The second logical channel is a logical channel indicated by the service type information of the transmitted logical channel corresponding to the first time-frequency resource, and the one or more logical channels include the second logical channel.

According to a third aspect, an embodiment of this application provides a communications method, including: sending first indication information to a terminal, where the first indication information is used to indicate a first time-frequency resource; and receiving first data from the terminal on the first time-frequency resource, where the first data is generated by the terminal based on a resource attribute of the first time-frequency resource, and the first data includes data of at least one logical channel.

In a possible implementation, the resource attribute of the first time-frequency resource is determined based on the first indication information, and the resource attribute of the first time-frequency resource includes that the first time-frequency resource is a semi-persistent time-frequency resource or the first time-frequency resource is a dynamic time-frequency resource.

In a possible implementation, the resource attribute of the first time-frequency resource includes that the first time-frequency resource is the semi-persistent time-frequency resource, and the first data does not include packet header information.

In a possible implementation, the first data includes data of only a first logical channel.

In a possible implementation, the resource attribute of the first time-frequency resource includes that the first time-frequency resource is the dynamic time-frequency resource, and the first data includes packet header information.

In a possible implementation, the communications method provided in this embodiment of this application further includes: sending second indication information to the terminal, where the second indication information is used to indicate the resource attribute of the first time-frequency resource, and the resource attribute of the first time-frequency resource includes that the first time-frequency resource is a transparent transmission resource or the first time-frequency resource is a non-transparent transmission resource.

In a possible implementation, the resource attribute of the first time-frequency resource includes that the first time-frequency resource is the transparent transmission resource, and the first data does not include packet header information.

In a possible implementation, the first data includes data of only a first logical channel.

In a possible implementation, the resource attribute of the first time-frequency resource includes that the first time-frequency resource is the non-transparent transmission resource, and the first data includes packet header information.

In a possible implementation, a service corresponding to the data of the first logical channel is a service transmitted at a MAC layer in a transparent transmission mode.

In a possible implementation, the data of the first logical channel includes data corresponding to an active noise reduction service.

In a possible implementation, the communications method provided in this embodiment of this application further includes: sending logical channel configuration information to the terminal, where the logical channel configuration information includes at least one of QoS information or service type information corresponding to one or more logical channels.

In a possible implementation, the at least one of the QoS information or the service type information corresponding to the one or more logical channels is used to determine whether a service corresponding to data of the one or more logical channels is the service transmitted at the MAC layer in the transparent transmission mode.

In a possible implementation, the one or more logical channels include a second logical channel. The resource attribute of the first time-frequency resource includes that the first time-frequency resource is the semi-persistent time-frequency resource, and when a service corresponding to data of the second logical channel is the service transmitted at the MAC layer in the transparent transmission mode, the first data includes the data of the second logical channel, and the first data does not include the packet header information. Alternatively, the resource attribute of the first time-frequency resource includes that the first time-frequency resource is the transparent transmission resource, and when a service corresponding to data of the second logical channel is the service transmitted at the MAC layer in the transparent transmission mode, the first data includes the data of the second logical channel, and the first data does not include the packet header information.

In a possible implementation, the one or more logical channels include a second logical channel. The resource attribute of the first time-frequency resource includes that the first time-frequency resource is the dynamic time-frequency resource, and when a service corresponding to data of the second logical channel is not the service transmitted at the MAC layer in the transparent transmission mode, the first data includes the data of the second logical channel, and the first data includes the packet header information. Alternatively, the resource attribute of the first time-frequency resource includes that the first time-frequency resource is the non-transparent transmission time-frequency resource, and when a service corresponding to data of the second logical channel is not the service transmitted at the MAC layer in the transparent transmission mode, the first data includes the data of the second logical channel, and the first data includes the packet header information.

In a possible implementation, the logical channel configuration information further includes at least one of data encapsulation attribute information or data transmission attribute information corresponding to the one or more logical channels. Data encapsulation attribute information corresponding to each logical channel is used to indicate whether data of the logical channel and data of another logical channel are allowed to be encapsulated in a single MAC PDU, and data transmission attribute information corresponding to each logical channel is used to indicate whether a transmission mode of data of the logical channel is a transparent transmission mode or a non-transparent transmission mode.

In a possible implementation, the one or more logical channels include a third logical channel, and the resource attribute of the first time-frequency resource includes that the first time-frequency resource is the semi-persistent time-frequency resource; and when data encapsulation attribute information corresponding to the third logical channel indicates that data of the third logical channel and data of another logical channel are not allowed to be encapsulated in a single MAC PDU, the first data includes the data of only the third logical channel, and the first data does not include the packet header information; and/or when data transmission attribute information corresponding to the third logical channel indicates that a transmission mode of the data of the third logical channel is a transparent transmission mode, the first data includes the data of only the third logical channel, and the first data does not include the packet header information.

In a possible implementation, the resource attribute of the first time-frequency resource includes that the first time-frequency resource is the dynamic time-frequency resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information.

In a possible implementation, the one or more logical channels include the second logical channel, and the resource attribute of the first time-frequency resource includes that the first time-frequency resource is the transparent transmission resource; and when data encapsulation attribute information of the second logical channel indicates that the data of the second logical channel and data of another logical channel are not allowed to be encapsulated in a single MAC PDU, the first data includes the data of only the second logical channel, and the first data does not include the packet header information; and/or when data transmission attribute information of the second logical channel indicates that a transmission mode of the data of the second logical channel is a transparent transmission mode, the first data includes the data of only the second logical channel, and the first data does not include the packet header information.

In a possible implementation, the resource attribute of the first time-frequency resource includes that the first time-frequency resource is the non-transparent transmission resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data transmission attribute information corresponding to each of the at least one logical channel indicates that a transmission mode of data of the logical channel is a non-transparent transmission mode, the first data includes the data of the at least one logical channel, and the first data includes the packet header information.

In a possible implementation, the communications method provided in this embodiment of this application further includes: sending third indication information to the terminal, where the third indication information is used to indicate the resource attribute of the first time-frequency resource, and the resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource.

If the resource attribute of the first time-frequency resource includes the logical channel identifier corresponding to the first time-frequency resource, the first data includes data of only a second logical channel, and the first data does not include packet header information. The second logical channel is a logical channel indicated by the logical channel identifier corresponding to the first time-frequency resource, and one or more logical channels include the second logical channel.

If the resource attribute of the first time-frequency resource includes the QoS information of the transmitted logical channel corresponding to the first time-frequency resource, the first data includes data of only a second logical channel, and the first data does not include packet header information. The second logical channel is a logical channel indicated by the QoS information of the transmitted logical channel corresponding to the first time-frequency resource.

If the resource attribute of the first time-frequency resource includes the service type information of the transmitted logical channel corresponding to the first time-frequency resource, the first data includes data of only a second logical channel, and the first data does not include packet header information. The second logical channel is a logical channel indicated by the service type information of the transmitted logical channel corresponding to the first time-frequency resource.

According to a fourth aspect, an embodiment of this application provides a communications apparatus, including a sending module and a receiving module. The sending module is configured to send first indication information to a terminal, where the first indication information is used to indicate a first time-frequency resource. The receiving module is configured to receive first data from the terminal on the first time-frequency resource, where the first data is generated by the terminal based on a resource attribute of the first time-frequency resource, and the first data includes data of at least one logical channel.

In a possible implementation, the resource attribute of the first time-frequency resource is determined based on the first indication information, and the resource attribute of the first time-frequency resource includes that the first time-frequency resource is a semi-persistent time-frequency resource or the first time-frequency resource is a dynamic time-frequency resource.

In a possible implementation, the resource attribute of the first time-frequency resource includes that the first time-frequency resource is the semi-persistent time-frequency resource, and the first data does not include packet header information.

In a possible implementation, the first data includes data of only a first logical channel.

In a possible implementation, the resource attribute of the first time-frequency resource includes that the first time-frequency resource is the dynamic time-frequency resource, and the first data includes packet header information.

In a possible implementation, the sending module is further configured to send second indication information to the terminal, where the second indication information is used to indicate the resource attribute of the first time-frequency resource, and the resource attribute of the first time-frequency resource includes that the first time-frequency resource is a transparent transmission resource or the first time-frequency resource is a non-transparent transmission resource.

In a possible implementation, the resource attribute of the first time-frequency resource includes that the first time-frequency resource is the transparent transmission resource, and the first data does not include packet header information.

In a possible implementation, the first data includes data of only a first logical channel.

In a possible implementation, the resource attribute of the first time-frequency resource includes that the first time-frequency resource is the non-transparent transmission resource, and the first data includes packet header information.

In a possible implementation, a service corresponding to the data of the first logical channel is a service transmitted at a MAC layer in a transparent transmission mode.

In a possible implementation, the data of the first logical channel includes data corresponding to an active noise reduction service.

In a possible implementation, the sending module is further configured to send logical channel configuration information to the terminal, where the logical channel configuration information includes at least one of QoS information or service type information corresponding to one or more logical channels.

In a possible implementation, the at least one of the QoS information or the service type information corresponding to the one or more logical channels is used to determine whether a service corresponding to data of the one or more logical channels is the service transmitted at the MAC layer in the transparent transmission mode.

In a possible implementation, the one or more logical channels include a second logical channel. The resource attribute of the first time-frequency resource includes that the first time-frequency resource is the semi-persistent time-frequency resource, and when a service corresponding to data of the second logical channel is the service transmitted at the MAC layer in the transparent transmission mode, the first data includes the data of the second logical channel, and the first data does not include the packet header information. Alternatively, the resource attribute of the first time-frequency resource includes that the first time-frequency resource is the transparent transmission resource, and when a service corresponding to data of the second logical channel is the service transmitted at the MAC layer in the transparent transmission mode, the first data includes the data of the second logical channel, and the first data does not include the packet header information.

In a possible implementation, the one or more logical channels include a second logical channel. The resource attribute of the first time-frequency resource includes that the first time-frequency resource is the dynamic time-frequency resource, and when a service corresponding to data of the second logical channel is not the service transmitted at the MAC layer in the transparent transmission mode, the first data includes the data of the second logical channel, and the first data includes the packet header information. Alternatively, the resource attribute of the first time-frequency resource includes that the first time-frequency resource is the non-transparent transmission time-frequency resource, and when a service corresponding to data of the second logical channel is not the service transmitted at the MAC layer in the transparent transmission mode, the first data includes the data of the second logical channel, and the first data includes the packet header information.

In a possible implementation, the logical channel configuration information further includes at least one of data encapsulation attribute information or data transmission attribute information corresponding to the one or more logical channels. Data encapsulation attribute information corresponding to each logical channel is used to indicate whether data of the logical channel and data of another logical channel are allowed to be encapsulated in a single MAC PDU, and data transmission attribute information corresponding to each logical channel is used to indicate whether a transmission mode of data of the logical channel is a transparent transmission mode or a non-transparent transmission mode.

In a possible implementation, the one or more logical channels include a third logical channel, and the resource attribute of the first time-frequency resource includes that the first time-frequency resource is the semi-persistent time-frequency resource; and when data encapsulation attribute information corresponding to the third logical channel indicates that data of the third logical channel and data of another logical channel are not allowed to be encapsulated in a single MAC PDU, the first data includes the data of only the third logical channel, and the first data does not include the packet header information; and/or when data transmission attribute information corresponding to the third logical channel indicates that a transmission mode of the data of the third logical channel is a transparent transmission mode, the first data includes the data of only the third logical channel, and the first data does not include the packet header information.

In a possible implementation, the resource attribute of the first time-frequency resource includes that the first time-frequency resource is the dynamic time-frequency resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information.

In a possible implementation, the one or more logical channels include the second logical channel, and the resource attribute of the first time-frequency resource includes that the first time-frequency resource is the transparent transmission resource; and when data encapsulation attribute information of the second logical channel indicates that the data of the second logical channel and data of another logical channel are not allowed to be encapsulated in a single MAC PDU, the first data includes the data of only the second logical channel, and the first data does not include the packet header information; and/or when data transmission attribute information of the second logical channel indicates that a transmission mode of the data of the second logical channel is a transparent transmission mode, the first data includes the data of only the second logical channel, and the first data does not include the packet header information.

In a possible implementation, the resource attribute of the first time-frequency resource includes that the first time-frequency resource is the non-transparent transmission resource; and when data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information; and/or when data transmission attribute information corresponding to each of the at least one logical channel indicates that a transmission mode of data of the logical channel is a non-transparent transmission mode, the first data includes the data of the at least one logical channel, and the first data includes the packet header information.

In a possible implementation, the sending module is further configured to send third indication information to the terminal, where the third indication information is used to indicate the resource attribute of the first time-frequency resource, and the resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource.

If the resource attribute of the first time-frequency resource includes the logical channel identifier corresponding to the first time-frequency resource, the first data includes data of only a second logical channel, and the first data does not include packet header information. The second logical channel is a logical channel indicated by the logical channel identifier corresponding to the first time-frequency resource, and one or more logical channels include the second logical channel.

If the resource attribute of the first time-frequency resource includes the QoS information of the transmitted logical channel corresponding to the first time-frequency resource, the first data includes data of only a second logical channel, and the first data does not include packet header information. The second logical channel is a logical channel indicated by the QoS information of the transmitted logical channel corresponding to the first time-frequency resource.

If the resource attribute of the first time-frequency resource includes the service type information of the transmitted logical channel corresponding to the first time-frequency resource, the first data includes data of only a second logical channel, and the first data does not include packet header information. The second logical channel is a logical channel indicated by the service type information of the transmitted logical channel corresponding to the first time-frequency resource.

According to a fifth aspect, an embodiment of this application provides a terminal, including a memory and at least one processor connected to the memory. The memory is configured to store instructions, and after the instructions are read by the at least one processor, the terminal performs the method according to any one of the first aspect or the possible implementations of the first aspect.

According to a sixth aspect, an embodiment of this application provides a computer-readable storage medium. The computer-readable storage medium includes a computer program, and when the computer program is run on a computer, the method according to any one of the first aspect or the possible implementations of the first aspect is performed.

According to a seventh aspect, an embodiment of this application provides a computer program product including instructions. When the computer program product runs on a computer, the computer is enabled to perform the method according to any one of the first aspect or the possible implementations of the first aspect.

According to an eighth aspect, an embodiment of this application provides a chip, including a memory and a processor. The memory is configured to store a computer program. The processor is configured to: invoke the computer program from the memory and run the computer program, to perform the method according to any one of the first aspect or the possible implementations of the first aspect.

According to a ninth aspect, an embodiment of this application provides a network device, including a memory and at least one processor connected to the memory. The memory is configured to store instructions, and after the instructions are read by the at least one processor, the network device performs the method according to any one of the third aspect or the possible implementations of the third aspect.

According to a tenth aspect, an embodiment of this application provides a computer-readable storage medium. The computer-readable storage medium includes a computer program, and when the computer program is run on a computer, the method according to any one of the third aspect or the possible implementations of the third aspect is performed.

According to an eleventh aspect, an embodiment of this application provides a computer program product including instructions. When the computer program product runs on a computer, the computer is enabled to perform the method according to any one of the third aspect or the possible implementations of the third aspect.

According to a twelfth aspect, an embodiment of this application provides a chip, including a memory and a processor. The memory is configured to store a computer program. The processor is configured to: invoke the computer program from the memory and run the computer program, to perform the method according to any one of the third aspect or the possible implementations of the third aspect.

It should be understood that, for beneficial effects achieved by the technical solutions in the second aspect to the twelfth aspect and the corresponding feasible implementations in embodiments of this application, refer to the foregoing technical effects in the first aspect and the corresponding possible implementations of the first aspect. Details are not described herein again.

### BRIEF DESCRIPTION OF DRAWINGS

FIG. 1 is a schematic diagram of an application scenario of a communications method according to an embodiment of this application;
FIG. 2 is a schematic diagram of hardware of a mobile phone according to an embodiment of this application;
FIG. 3 is a schematic diagram 1 of a communications method according to an embodiment of this application;
FIG. 4 is a schematic diagram 2 of a communications method according to an embodiment of this application;
FIG. 5A is a schematic diagram 1 of a format of a MAC PDU according to an embodiment of this application;
FIG. 5B is a schematic diagram 2 of a format of a MAC PDU according to an embodiment of this application;
FIG. 6 is a schematic diagram of a method for encapsulating data of a logical channel according to an embodiment of this application;
FIG. 7 is a schematic diagram 3 of a communications method according to an embodiment of this application;
FIG. 8 is a schematic diagram 4 of a communications method according to an embodiment of this application;
FIG. 9 is a schematic diagram 5 of a communications method according to an embodiment of this application;
FIG. 10 is a schematic diagram 1 of a structure of a communications apparatus according to an embodiment of this application;
FIG. 11 is a schematic diagram 2 of a structure of a communications apparatus according to an embodiment of this application;
FIG. 12 is a schematic diagram 1 of a structure of another communications apparatus according to an embodiment of this application; and
FIG. 13 is a schematic diagram 1 of a structure of another communications apparatus according to an embodiment of this application.

### DESCRIPTION OF EMBODIMENTS

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not describe a particular order of the objects. For example, a first logical channel, a second logical channel, and the like are used to distinguish between different logical channels, but are not used to describe a particular order of the logical channels. First indication information, second indication information, third indication information, and the like are used to distinguish between different indication information, but are not used to describe a particular order of the indication information.

In embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of words such as "example" or "for example" is intended to present a related concept in a specific manner.

In descriptions of embodiments of this application, unless otherwise specified, "at least one" means one or more, for example, at least one logical channel refers to one or more logical channels; and "a plurality of" means two or more, for example, a plurality of logical channels refer to two or more logical channels.

First, some concepts and background knowledge related to a communications method and apparatus provided in embodiments of this application are described.

Logical channel: Generally, different services usually have different QoS requirements. Therefore, different logical channels may be established for the different services, to ensure differentiated QoS requirements of the different services. For example, different logical channels are respectively established for an audio service and a video service. Certainly, it may be understood that a same logical channel may also be established for one or more services with similar QoS requirements, to reduce a quantity of logical channels and facilitate management.

It should be noted that a logical channel is an abstract concept, and data of different logical channels corresponds to one or more types of traffic data of the logical channel. Optionally, the traffic data may be a traffic data packet, or the traffic data may be a traffic data packet queue. In a broader sense, a logical channel is a plurality of virtual channels obtained through division based on different transmission content of a physical channel. That is, the physical channel is used to actually complete transmission, and the logical channel is used to define transmission content. Logical channels may be classified into two types: a control channel and a traffic channel. The control channel is used to transmit control plane information, and the traffic channel is used to transmit user plane information (for example, traffic data).

All logical channels in embodiments of this application are traffic channels, and are used to transmit traffic data. In addition, data transmission in embodiments of this application is transmission of data of a logical channel at a MAC layer.

In a process of transmitting data by using a wireless communications technology, data transmission between a network device and a terminal is used as an example. The network device may schedule a radio resource for the terminal, so that the terminal sends data to the network device based on the radio resource scheduled by the network device for the terminal. With rapid development and wide application of wireless communications technologies, service types are increasingly diversified, and different service types have different requirements for quality of service. Based on this, an embodiment of this application provides a communications method. After a terminal receives first indication information that is sent by a network device and that is used to indicate a first time-frequency resource to the terminal, the terminal generates first data based on an attribute of the first time-frequency resource, where the first data includes data of at least one logical channel, and then the terminal sends the first data to the network device on the first time-frequency resource. According to the communications method provided in this embodiment of this application, data transmission efficiency can be improved, and quality of service of different services can be ensured.

Optionally, the communications method provided in this embodiment of this application may be applied to different data transmission scenarios, and is used to transmit data corresponding to different service types, for example, data with a large data amount such as image data and video data (this type of data may be understood as data of a large-packet service) and data of an active noise reduction service (this type of data may be understood as data of a small-packet service).

For example, in this embodiment of this application, an intelligent cockpit scenario relates to vehicle-mounted active noise reduction and another type of service (for example, a video service). The vehicle-mounted active noise reduction is used to neutralize noise such as engine noise, road noise, and wind noise by transmitting a phase-inverted acoustic signal by using a vehicle-mounted speaker, to achieve global or regional silence in a vehicle and eliminate or reduce the noise in the vehicle. Specifically, a plurality of vehicle-mounted microphones need to collect in-vehicle noise signals, transmit the in-vehicle noise signals to a processor unit to generate phase-inverted noise signals, and then transmit the phase-inverted noise signals to a plurality of vehicle-mounted speakers for separate playback, to implement active noise reduction at a cockpit receive end. To ensure that phase-inverted noise and real noise cancel each other and ensure that a noise reduction system can work stably, a latency of noise collection, processing, and transmission, generation of a phase-inverted noise signal, and transmission of the phase-inverted noise signal to a vehicle-mounted speaker and playback of the phase-inverted noise signal at a cockpit receive end needs to be less than a latency of transmission of real noise to the cockpit receive end for playback, and transmission of the noise signal and the phase-inverted noise signal needs to meet a requirement of high reliability.

For example, a microphone collects a noise signal. Usually, the microphone samples noise in a cockpit based on a fixed period (for example, 48 kilohertz), and a quantization bit length of data sampled at a single time is also small (for example, 24 bits). If the sampled data needs to be transmitted in real time, an amount (payload) of data transmitted at a single time is small, that is, 24 bits.

It should be noted that the network device in this embodiment of this application may also be referred to as an access device or a radio access network device, may be an evolved NodeB (evolved NodeB, eNB or eNodeB) in a long term evolution (long term evolution, LTE) system, or may be a radio controller in a cloud radio access network (cloud radio access network, CRAN) scenario. Alternatively, the access device may be a relay station, an access point, a vehicle-mounted device, a wearable device, an access device in a 5G network, a network device in a future evolved public land mobile network (public land mobile network, PLNIN), may be an access point (access point, AP) in a wireless local area network (wireless local area network, WLAN), may be a gNB in a new radio (new radio, NR) system, or the like. This is not limited in this embodiment of this application.

Optionally, the access device is a device in a radio access network (radio access network, RAN), or a RAN node that connects a terminal to a wireless network. By way of example but not limitation, an access network device is, for example, a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. In a network structure, the network device may include a centralized unit (centralized unit, CU) node or a distributed unit (distributed unit, DU) node, a RAN device including a CU node and a DU node, or a RAN device including a CU control plane node (CU-CP node), a CU user plane node (CU-UP node), and a DU node.

Optionally, the terminal may be in a plurality of forms. This is not limited in this embodiment of this application.

In a possible implementation, the terminal may be an independent device.

In another possible implementation, the terminal may be integrated into another device as a functional module or a chip apparatus.

It should be noted that the terminal in this embodiment of this application may be a device that provides voice/data connectivity for a user, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in self-driving (self-driving), a cellular phone, a cordless phone, a session initiation protocol (session initiation protocol, SIP) phone, a personal digital assistant (personal digital assistant, PDA), a handheld device with a wireless communication function, a computing device, a vehicle-mounted device, a wearable device, a terminal device in a 5G network, and a terminal device in a future evolved public land mobile network (public land mobile network, PLMN). This is not limited in this embodiment of this application.

It should be further noted that the wearable device may also be referred to as a wearable intelligent device, and is a general term of wearable devices such as glasses, gloves, watches, clothes, and shoes that are developed by applying wearable technologies in intelligent designs of daily wear. The wearable device is a portable device that can be directly worn on the body or integrated into clothes or an accessory of a user.

It should be further noted that, in this embodiment of this application, terminals are classified into a "vehicle-mounted terminal" and a "non-vehicle-mounted terminal" based on a relationship between a terminal and a cockpit.

The "vehicle-mounted terminal", also referred to as an on-board unit (on-board unit, OBU), is a device that is integrated into or installed on a cockpit domain and that belongs to a part of the cockpit domain, for example, a vehicle-mounted speaker, a vehicle-mounted microphone, or a vehicle-mounted display. Usually, the vehicle-mounted terminal may be a device factory-installed (factory-installed) on a vehicle by a vehicle manufacturer.

The "non-vehicle-mounted terminal" is a device that is placed in a cockpit domain and that can communicate with or connect to another device in the cockpit domain, but does not belong to a part of the cockpit, for example, an intelligent terminal, a tablet computer, a Bluetooth headset, or a wearable device of a user.

In a possible implementation, the network device in this embodiment of this application may be a cockpit domain controller (cockpit domain controller, CDC), and the at least one terminal may include at least one of the vehicle-mounted terminal or the non-vehicle-mounted terminal.

For example, the CDC may communicate with the vehicle-mounted display, the intelligent terminal, and the vehicle-mounted speaker.

It should be noted that the vehicle manufacturer may integrate the CDC and the at least one vehicle-mounted terminal into the vehicle, for example, in a cabin domain of the vehicle, in a vehicle manufacturing process.

In another possible implementation, the network device in this embodiment of this application may be an intelligent terminal, and the at least one terminal may include at least one of the vehicle-mounted terminal or the non-vehicle-mounted terminal.

For example, the intelligent terminal may communicate with the vehicle-mounted speaker, the Bluetooth headset, and the vehicle-mounted microphone.

Optionally, the network device may communicate with the terminal in a plurality of manners. This is not limited in this embodiment of this application.

In a possible implementation, the network device may communicate with the terminal in a wired manner.

It should be noted that the wired manner may be implementing communication through a data cable connection or an internal bus connection.

In another possible implementation, the network device may communicate with the terminal in a wireless manner.

It should be noted that the wireless manner may be implementing communication through a communications network. The communications network may be a local area network, or may be a wide area network transferred by using a relay (relay) device, or may include a local area network and a wide area network. For example, when the communications network is a local area network, the communications network may be a short-range communications network such as a Wi-Fi hotspot network, a Wi-Fi P2P network, a Bluetooth network, a ZigBee network, or a near field communication (near field communication, NFC) network. For example, when the communications network is a wide area network, the communications network may be a 3rd generation (3rd-generation wireless telephone technology, 3G) network, a 4th generation (the 4th-generation mobile communication technology, 4G) network, a 5th generation (5th-generation mobile communication technology, 5G) network, a PLMN, or the internet. This is not limited in this embodiment of this application.

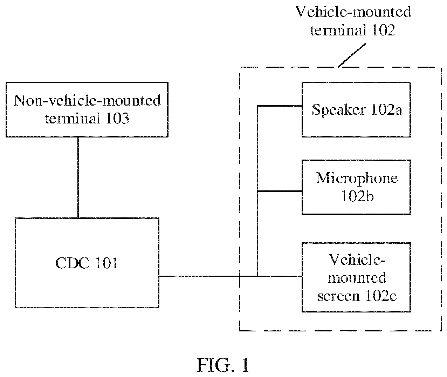

For example, an application scenario of the communications method provided in this embodiment of this application is an intelligent cockpit of a vehicle, and the intelligent cockpit can provide a user with extensive experience such as entertainment, audio, a video, and office. In the intelligent cockpit scenario shown in FIG. 1, the intelligent cockpit includes a CDC 101, a vehicle-mounted terminal 102, a non-vehicle-mounted terminal 103, and the like. For example, the vehicle-mounted terminal 102 may include devices such as a speaker 102a, a microphone 102b, and a vehicle-mounted screen 102c, and the non-vehicle-mounted terminal 103 may be a mobile phone, a computer, or the like. The CDC 101 establishes communication connections to the vehicle-mounted terminal 102 and the non-vehicle-mounted terminal 103 to transmit data, so as to implement playback of audio, a video, and the like.

In this embodiment of this application, the CDC is connected to the speaker, the microphone, the terminal, and the like in a wireless manner, and the CDC schedules a radio resource for the speaker, the microphone, the terminal, and the like to implement wireless communication with the CDC. Optionally, the wireless communication manner may be Bluetooth, Wi-Fi, another wireless communications technology (including another short-range communications technology), or the like. This is not limited in this embodiment of this application.

In conclusion, in the communications method provided in this embodiment of this application, the network device may be the CDC in the intelligent cockpit, and the terminal may be the vehicle-mounted terminal or the non-vehicle-mounted terminal in the intelligent cockpit. In the foregoing application scenario, communication between the CDC and the vehicle-mounted terminal and communication between the CDC and the non-vehicle-mounted terminal in this embodiment of this application include: The CDC configures a time-frequency resource for the vehicle-mounted terminal or the non-vehicle-mounted terminal, so that the vehicle-mounted terminal or the non-vehicle-mounted terminal encapsulates data of a logical channel based on a resource attribute of the time-frequency resource configured by the CDC, and sends encapsulated data to the CDC on the time-frequency resource.

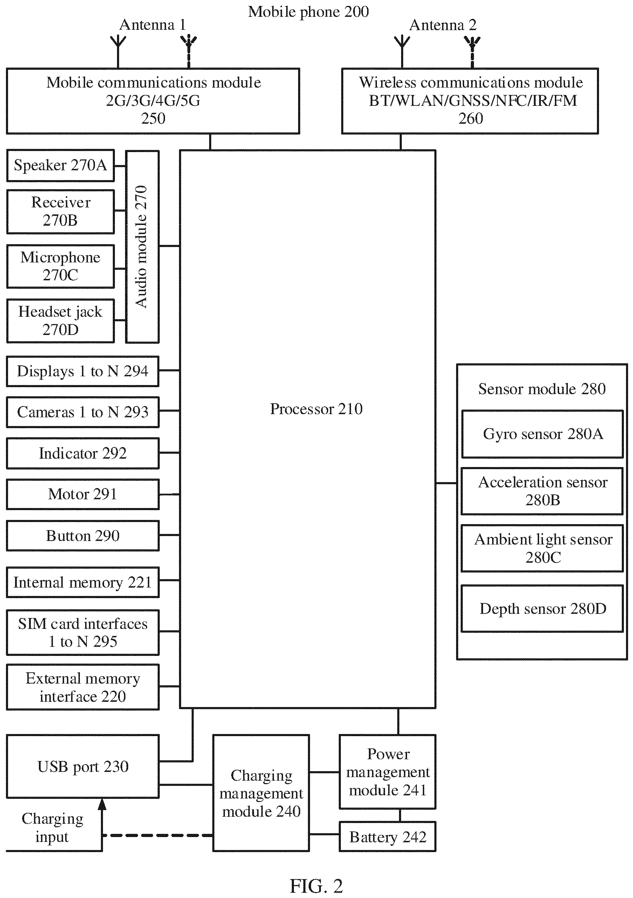

For example, the non-vehicle-mounted terminal 103 shown in FIG. 1 is a mobile phone. FIG. 2 is a schematic diagram of a hardware structure of a mobile phone according to an embodiment of this application. As shown in FIG. 2, the mobile phone 200 includes a processor 210, a memory (including an external memory interface 220 and an internal memory 221), a universal serial bus (universal serial bus, USB) port 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a gyro sensor 280A, an acceleration sensor 280B, an ambient light sensor 280C, a depth sensor 280D, a magnetic sensor, a pressure sensor, a distance sensor, an optical proximity sensor, a heart rate sensor, a barometric pressure sensor, a fingerprint sensor, a temperature sensor, a touch sensor, a bone conduction sensor, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video or audio codec, a digital signal processor (digital signal processor, DSP), a baseband processor, and/or a neural-network processing unit (neural-network processing unit, NPU). Different processing units may be independent components, or may be integrated into one or more processors.

With reference to the application scenario shown in FIG. 1, for data of a small-packet service (for example, an active noise reduction service), data of a plurality of logical channels is encapsulated in one MAC PDU by using a logical channel priority-based encapsulation mechanism, and the MAC PDU includes packet header information. In this way, data encapsulation overheads are greatly increased, resulting in low system transmission.

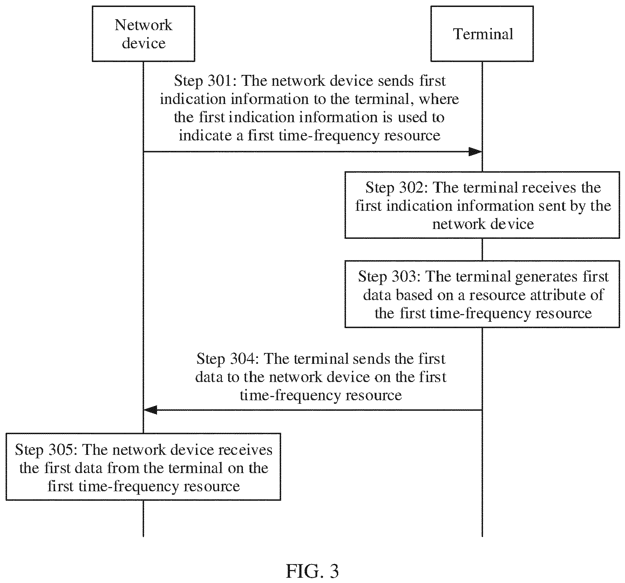

Based on the foregoing problem, an embodiment of this application provides a communications method. In the communications method, a terminal may be a vehicle-mounted device (a microphone, a speaker, or the like) or another terminal (a mobile phone, a computer, or the like), and a network device may be a CDC. As shown in FIG. 3, the communications method provided in this embodiment of this application includes step 301 to step 305.

Step 301: A network device sends first indication information to a terminal, where the first indication information is used to indicate a first time-frequency resource.

It should be understood that the first indication information is information for configuring a time-frequency resource for the terminal. Optionally, the first indication information may be carried in radio resource control (radio resource control, RRC) signaling, and the RRC signaling includes system information (system information). Alternatively, the first indication information may be carried on a physical control channel (physical control channel, PCCH), for example, a downlink control indicator (downlink control indicator, DCI). Alternatively, the first indication information may be carried in a management frame (management frame), and the management frame is used to perform management functions such as resource configuration and connection management between the terminal (including a vehicle-mounted device) and the network device. Different from the management frame, a data frame is mainly used to carry traffic data.

Step 302: The terminal receives the first indication information sent by the network device.

The first indication information is used to indicate the first time-frequency resource.

Step 303: The terminal generates first data based on a resource attribute of the first time-frequency resource.

The first data includes data of at least one logical channel.

It should be noted that the data of the logical channel may be a data packet, or may be a data packet queue. This is not limited in this embodiment of this application.

In a first implementation, the resource attribute of the first time-frequency resource includes that the first time-frequency resource is a semi-persistent time-frequency resource or a dynamic time-frequency resource.

The semi-persistent time-frequency resource is used by the terminal to periodically transmit data. To be specific, a time-frequency resource used for a plurality of times of data transmission is indicated to the terminal by using one piece of indication information. Usually, semi-persistent time-frequency resources are periodic in time domain, and are the same in frequency domain. In addition, a size of a time-frequency resource (that is, a resource quantity of the time-frequency resource) used for each data transmission is usually fixed. During each data transmission, the terminal sends data on a currently configured time-frequency resource. The dynamic time-frequency resource is used by the terminal to transmit data for a single time. To be specific, when the terminal needs to send data next time, the network device reallocates a time-frequency resource to the terminal, and indicates the time-frequency resource to the terminal. Usually, because the time-frequency resource is dynamically scheduled by the network device, a time-frequency location and a size of a dynamic time-frequency resource for each data transmission are variable.

It should be noted that semi-persistent may also be referred to as semi-persistent (semi-persistent) or semi-persistent scheduling (semi-persistent scheduling, SPS).

In a second implementation, the resource attribute of the first time-frequency resource includes that the first time-frequency resource is a transparent transmission resource or a non-transparent transmission resource.

In this embodiment of this application, transparent transmission, also referred to as transparent transmission (Transparent transmission), means that when at least one service data unit SDU is processed at a protocol layer, a protocol data unit PDU generated at the protocol layer includes the at least one SDU, but corresponding packet header information is not added. Optionally, the generated PDU is equivalent to the SDU, that is, the SDU is "not" processed at the protocol layer. This is similar to transparency, and therefore is referred to as transparent transmission.

Using a transparent transmission mode for the data of the at least one logical channel refers to encapsulating the data of the at least one logical channel in a MAC PDU, where the MAC PDU does not include packet header information. In an encapsulation process, the data of the logical channel is not segmented. Optionally, the data of the logical channel may be a data packet. Optionally, a single logical channel may include at least one data packet. Optionally, the data of the logical channel may be a MAC SDU.

A non-transparent transmission mode means that when at least one service data unit SDU is processed at a protocol layer, a protocol data unit PDU generated at the protocol layer includes both the at least one SDU and response packet header information. The packet header information includes at least a length of the at least one SDU. Optionally, the packet header information further includes a logical channel identifier corresponding to the SDU. It may be understood that the non-transparent transmission mode allows data segmentation to be performed on a service data unit SDU based on a resource quantity of a time-frequency resource.

It should be noted that the transparent transmission resource and the non-transparent transmission resource are defined based on a characteristic of data transmitted by using a resource. For example, a resource used to transmit data whose transmission mode is a transparent transmission mode is defined as the transparent transmission resource, and a resource used to transmit data whose transmission mode is a non-transparent transmission mode is defined as the non-transparent transmission resource. Alternatively, for example, a resource used to transmit data whose service type is an active noise reduction service is defined as the transparent transmission resource, and a resource used to transmit data of a service other than the active noise reduction service is defined as the non-transparent transmission resource.

In a third implementation, the resource attribute of the first time-frequency resource includes at least one of a logical channel identifier corresponding to the first time-frequency resource, QoS information of a transmitted logical channel corresponding to the first time-frequency resource, or service type information of the transmitted logical channel corresponding to the first time-frequency resource.

In this embodiment of this application, the resource attribute of the time-frequency resource is defined in the foregoing three different implementations. After receiving the first indication information, that the terminal generates first data based on a resource attribute of the first time-frequency resource specifically includes: The terminal encapsulates the data of the at least one logical channel based on the resource attribute defined in any one of the foregoing three implementations, to generate the first data, and then sends the first data on the first time-frequency resource. A process of generating the first data based on the resource attribute of the first time-frequency resource is described in detail in the following embodiment.

Step 304: The terminal sends the first data to the network device on the first time-frequency resource.

Optionally, that the terminal sends the first data to the network device on the first time-frequency resource may be as follows: The terminal sends the first data to the network device on some resources in the first time-frequency resource. Alternatively, the terminal sends the first data to the network device on all resources in the first time-frequency resource.

According to the communications method provided in this embodiment of this application, the terminal encapsulates data of a logical channel based on the resource attribute of the first time-frequency resource. Different resource attributes of the first time-frequency resource indicate different encapsulation manners of the data of the logical channel, that is, different data formats of the first data. In this way, the data of the logical channel can be flexibly encapsulated to generate the first data, and then the first data is sent on the first time-frequency resource, so that data transmission efficiency can be improved.

Step 305: The network device receives the first data from the terminal on the first time-frequency resource.

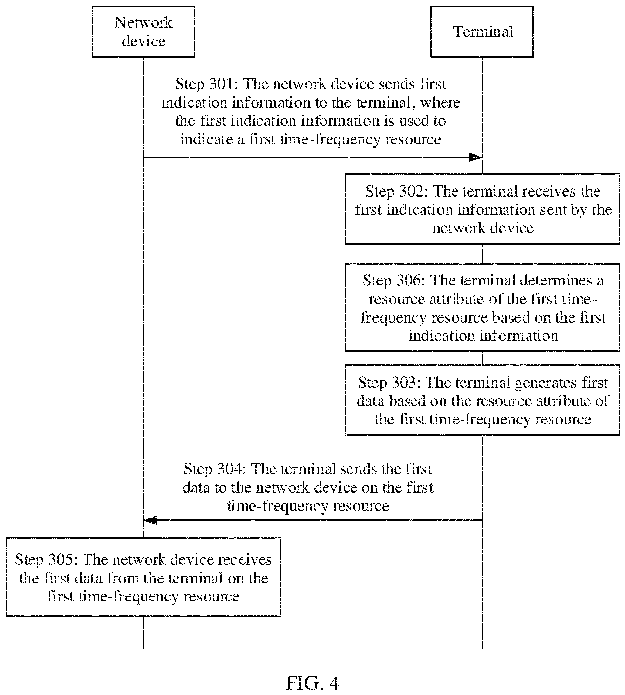

With reference to FIG. 3, as shown in FIG. 4, in the foregoing first implementation, before the first data is generated based on the resource attribute of the first time-frequency resource, that is, before step 303, the communications method provided in this embodiment of this application further includes step 306.

Step 306: The terminal determines the resource attribute of the first time-frequency resource based on the first indication information.

It should be understood that the resource attribute of the first time-frequency resource includes that the first time-frequency resource is a semi-persistent time-frequency resource or the first time-frequency resource is a dynamic time-frequency resource.

In this embodiment of this application, if the first indication information is semi-persistent resource configuration information, the first time-frequency resource indicated by the first indication information is the semi-persistent time-frequency resource. If the first indication information is dynamic resource configuration information, the first time-frequency resource indicated by the first indication information is the dynamic time-frequency resource.

In another feasible implementation, the first indication information is used to perform resource configuration, the first indication information may carry first element information, and the first element information is used to indicate whether a time-frequency resource is a dynamic time-frequency resource or a semi-persistent time-frequency resource. For example, one bit in a DCI is used for indication, where 0 indicates a dynamic scheduling resource, and 1 indicates a semi-persistent scheduling resource.

The resource attribute of the first time-frequency resource includes that the first time-frequency resource is the semi-persistent time-frequency resource, that is, it is determined, based on the first indication information, that the first time-frequency resource is the semi-persistent time-frequency resource; and the first data does not include packet header information. That is, when the terminal performs data encapsulation, no packet header is added to a MAC PDU formed through encapsulation.

It may be understood that the MAC PDU may include at least one MAC SDU. In this case, that the MAC PDU does not include a packet header means that the MAC PDU does not include a sub-header that is of a MAC SDU and that corresponds to any MAC SDU.

Optionally, the MAC PDU is the same as the MAC SDU (data of one logical channel is denoted as one MAC SDU). Alternatively, the MAC PDU does not include a packet header, and a CRC code of a fixed bit is added to a tail of the MAC PDU. Alternatively, the MAC PDU does not include a packet header, and padding of a specific length is added to a tail of the MAC PDU, to form an entire byte.

Further, the first data includes data of only a first logical channel. That is, when the terminal performs data encapsulation, the MAC PDU formed through encapsulation does not include a packet header, and includes data of only one logical channel.

The attribute of the first time-frequency resource includes that the first time-frequency resource is the dynamic time-frequency resource, that is, it is determined, based on the first indication information, that the first time-frequency resource is the dynamic time-frequency resource; and the first data includes packet header information. That is, when the terminal performs data encapsulation, a packet header needs to be added to a MAC PDU formed through encapsulation. The MAC PDU (that is, the first data) includes data of one or more logical channels.

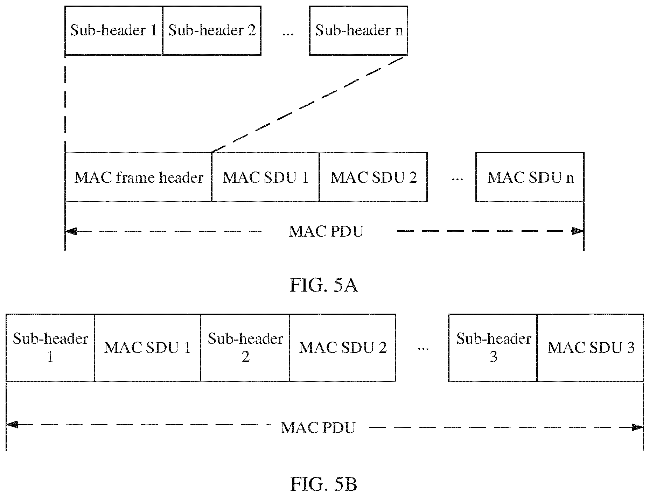

When the first time-frequency resource is a dynamic time-frequency resource, and the first data (MAC PDU) includes data of a plurality of logical channels, that is, when the data of the plurality of logical channels is encapsulated in one MAC PDU, a packet header of the MAC PDU includes sub-headers corresponding to respective MAC SDUs of the plurality of logical channels. It may be understood that, usually, the sub-header corresponding to the MAC SDU includes information related to the MAC SDU. For example, the sub-header of the MAC SDU may include at least one of a logical channel identifier corresponding to the MAC SDU, length indication information of the MAC SDU, and information indicating whether the MAC SDU is a last SDU in the MAC PDU. Optionally, FIG. 5A and FIG. 5B show two optional encapsulation formats of a MAC PDU. As shown in FIG. 5A, a sub-header (sub-header) of a MAC SDU 1 is a sub-header 1, a sub-header of a MAC SDU 1 is a sub-header 2, ..., and a sub-header of a MAC SDU n is a sub-header n. In the MAC PDU, respective sub-headers of the plurality of MAC SDUs are uniformly encapsulated in a frame header (MAC header) of the MAC PDU. As shown in FIG. 5B, in the MAC PDU, respective sub-headers of a plurality of MAC SDUs are respectively located in front of the MAC SDUs, that is, the plurality of MAC SDUs are alternately arranged.

Similarly, optionally, the MAC PDU may include a CRC code of a fixed bit.

Optionally, the MAC PDU includes padding of a specific length, to form an entire byte.

Optionally, the MAC SDU may also be encrypted to protect data confidentiality. Optionally, the MAC PDU may include an integrity protection verification code.

In this embodiment of this application, optionally, when data of a plurality of logical channels is encapsulated in one MAC PDU, a method for encapsulating the data of the plurality of logical channels includes: encapsulating the data of the plurality of logical channels based on respective logical channel priorities and respective prioritized bit rates (prioritized bit rate, PBR) of the plurality of logical channels. The priority of the logical channel is used to indicate a data encapsulation rank of the logical channel, and the PBR is used to indicate a data amount of data encapsulated at a single time corresponding to the logical channel. Optionally, a PBR of a single logical channel may be set to infinity.

Optionally, the priority and the PBR of the logical channel may be agreed on in a protocol, or may be configured by the network device for the terminal in a logical channel establishment process. This is not limited in this embodiment of this application.

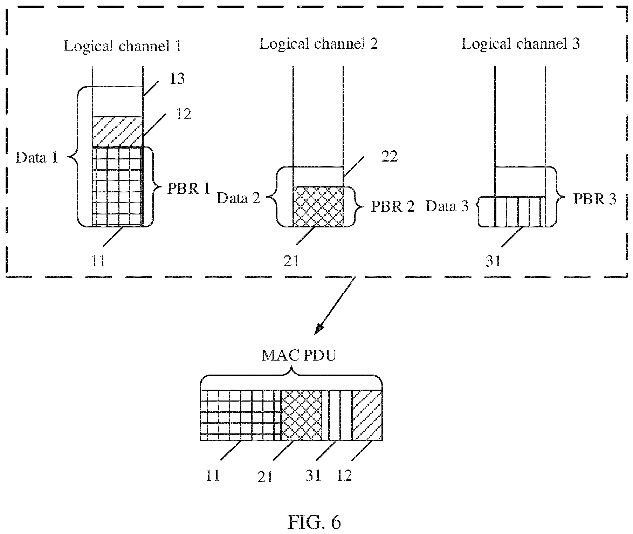

The following describes, by using an example, a process of encapsulating data of a plurality of logical channels in one MAC PDU. As shown in FIG. 6, three logical channels are used as an example and are respectively denoted as a logical channel 1, a logical channel 2, and a logical channel 3. To-be-transmitted data of the logical channel 1 is data 1, to-be-transmitted data of the logical channel 2 is data 2, and to-be-transmitted data of the logical channel 3 is data 3. Priorities of the three logical channels are sequentially the logical channel 1, the logical channel 2, and the logical channel 3 in descending order, and PBRs of the three logical channels are denoted as a PBR 1, a PBR 2, and a PBR 3. A data amount of the data 1 is greater than the PBR 1, a data amount of the data 2 is greater than the PBR 2, and a data amount of the data 3 is less than the PBR 3. In FIG. 6, data of the respective data amounts PBR 1, PBR 2, and PBR 3 of the three logical channels is first sequentially encapsulated based on a resource quantity of a time-frequency resource configured by a network device for a terminal, a priority of a logical channel, and a PBR of a logical channel. Then, if there is still a remaining first time-frequency resource, remaining data of the three logical channels is sequentially encapsulated based on the priorities of the three logical channels.

With reference to FIG. 6, it can be learned that a part 11 and a part 12 in the data 1 of the logical channel 1, a part 21 in the data 2 of the logical channel 2, and a part 31 in the data 3 of the logical channel 3 are encapsulated in one MAC PDU. It should be noted that because a resource quantity of the first time-frequency resource is insufficient, a part 13 in the data 1 of the logical channel 1 and a part 22 in the data 2 of the logical channel 2 are not encapsulated in the MAC PDU.

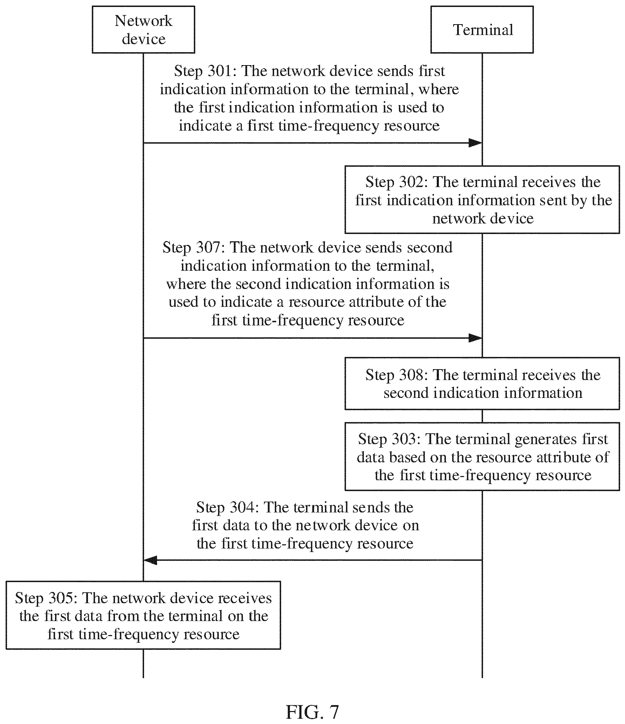

With reference to FIG. 3, as shown in FIG. 7, in the foregoing second implementation, before the first data is generated based on the resource attribute of the first time-frequency resource, that is, before step 303, the communications method provided in this embodiment of this application further includes step 307 and step 308.

Step 307: The network device sends second indication information to the terminal, where the second indication information is used to indicate the resource attribute of the first time-frequency resource.

The resource attribute of the first time-frequency resource includes that the first time-frequency resource is a transparent transmission resource or the first time-frequency resource is a non-transparent transmission resource. For descriptions of the transparent transmission resource and the non-transparent transmission resource, refer to related descriptions in the foregoing embodiment. Details are not described herein again.

In this embodiment of this application, similar to the first indication information, the second indication information may be carried in RRC signaling, a PCCH, or a management frame. Details are not described herein again.

Optionally, the first indication information and the second indication information may be carried in same RRC signaling, or may be carried in different RRC signaling. This is not specifically limited in this embodiment of this application. In a possible implementation, the first indication information is carried in RRC signaling, and the second indication information is carried on a PCCH.

Optionally, in this embodiment of this application, there is a correspondence between second indication information and first indication information. For example, when the first indication information indicates the first time-frequency resource, the second indication information indicates that the first time-frequency resource is the transparent transmission resource. The correspondence between second indication information and first indication information may be implicit or explicit.

It should be noted that an execution sequence of step 301 and step 307 is not limited in this embodiment of this application. To be specific, step 301 may be performed before step 307, or step 307 may be performed before step 301, or step 301 and step 307 may be simultaneously performed.

Step 308: The terminal receives the second indication information.

The resource attribute of the first time-frequency resource includes that the first time-frequency resource is the transparent transmission resource, that is, the second indication information indicates that the first time-frequency resource is the transparent transmission resource; and the first data does not include packet header information. That is, when the terminal performs data encapsulation, no packet header is added to a MAC PDU formed through encapsulation.

Further, the first data includes data of only a first logical channel. That is, when the terminal performs data encapsulation, the MAC PDU formed through encapsulation does not include a packet header, and includes data of only one logical channel.

It should be noted that a manner of encapsulating the data of the logical channel when the first time-frequency resource is the transparent transmission resource is the same as the manner of encapsulating the logical channel when the first time-frequency resource is the semi-persistent resource. For descriptions of the MAC PDU, refer to related descriptions in step 306 in the foregoing embodiment. Details are not described herein again.

The attribute of the first time-frequency resource includes that the first time-frequency resource is the non-transparent transmission resource, that is, the second indication information indicates that the first time-frequency resource is the non-transparent transmission resource; and the first data includes packet header information. That is, when the terminal performs data encapsulation, a packet header needs to be added to a MAC PDU formed through encapsulation. The MAC PDU (that is, the first data) includes data of one or more logical channels.

Similarly, a manner of encapsulating the data of the logical channel when the first time-frequency resource is the non-transparent transmission resource is the same as the manner of encapsulating the logical channel when the first time-frequency resource is the dynamic time-frequency resource. For descriptions of the MAC PDU, refer to related descriptions in step 306 in the foregoing embodiment. Details are not described herein again.

In this embodiment of this application, when the first time-frequency resource is the semi-persistent resource or the transparent transmission resource, the first data includes the data of only the first logical channel, a service corresponding to the data of the first logical channel is a service transmitted at a MAC layer in a transparent transmission mode, and the service transmitted at the MAC layer in the transparent transmission mode is a service specified in a protocol. Alternatively, the data of the first logical channel is data corresponding to an active noise reduction service. In conclusion, for the service transmitted at the MAC layer in the transparent transmission mode or for the active noise reduction service, data of only one logical channel is encapsulated in a single MAC PDU, no packet header information is included, and the MAC PDU is sent on the semi-persistent time-frequency resource or the transparent transmission resource.

Optionally, the data of the first logical channel may alternatively be another periodic service or a small-packet service. This is not limited in this embodiment of this application.

In conclusion, in this embodiment of this application, the terminal may perform data encapsulation based on the resource attribute of the first time-frequency resource. When the first time-frequency resource is the semi-persistent resource or the transparent transmission resource, for the data transmitted at the MAC layer in the transparent transmission mode or the data of the active noise reduction service, the terminal encapsulates data that is of a logical channel and that corresponds to the service in a single MAC PDU, and the MAC PDU does not include packet header information. In this way, overheads of transmitting the data transmitted in the transparent transmission mode or the data of the active noise reduction service can be effectively reduced, and data transmission efficiency can be improved.

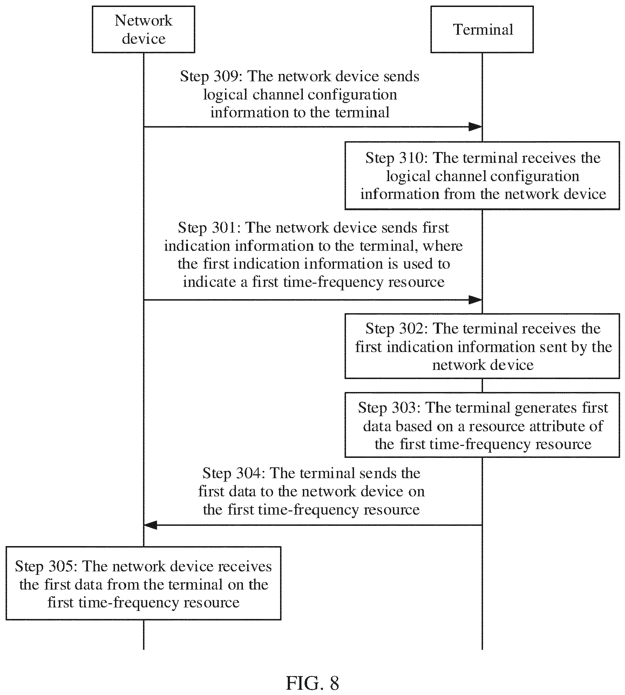

Optionally, with reference to FIG. 3 (or FIG. 4 or FIG. 7), as shown in FIG. 8, before the first data is generated based on the resource attribute of the first time-frequency resource (that is, step 303), the communications method provided in this embodiment of this application further includes step 309 and step 310.

Step 309: The network device sends logical channel configuration information to the terminal.

The logical channel configuration information includes at least one of a logical channel identifier, quality of service QoS information, or service type information corresponding to one or more logical channels.

It should be understood that, optionally, in a logical channel establishment phase, the terminal may report information such as a service type of the terminal to the network device, so that the network device creates a logical channel for the terminal, and sends logical channel configuration information to the terminal. When the logical channel configuration information includes a plurality of types of information in the foregoing three types of information, there is a correspondence between the plurality of types of information. For example, the logical channel includes the foregoing three types of information. There is a correspondence between the logical channel identifier, the QoS information, and the service type information in the logical channel configuration information. Three logical channels are used as an example. Table 1 shows an example of the logical channel configuration information.

**Table 1**

| Logical channel identifier | QoS | Service type |
|---|---|---|
| ID 1 | A1 | B1 |
| ID 2 | A2 | B2 |
| ID 3 | A3 | B3 |

In Table 1, A1, A2, and A3 respectively indicate different QoS, and B1, B2, and B3 respectively indicate different service types.

The logical channel identifier is used to uniquely identify a logical channel, and the QoS information is used to indicate a QoS requirement or requirement of data of a logical channel. For example, the QoS requirement or requirement may include but is not limited to one or more of a priority (priority) of data, reliability (reliability) of data, a transmission rate (data rate) of data, a transmission latency (latency) of data, and a communication range (range) of data. Optionally, the QoS information may be a QoS class index QCI or a QoS flow identifier (QoS flow ID). This is not limited in this embodiment of this application. Optionally, a correspondence between a QCI or a QoS flow ID and a corresponding QoS requirement or requirement may be agreed on in a protocol.

The service type information is used to indicate a service type of data of a logical channel. Optionally, service types may be distinguished based on an application identifier (application ID, AID). For example, an AID of an active noise reduction service is 1, and an AID of a video service is 2.

It should be noted that the one or more logical channels are logical channels established by the network device for the terminal. A concept of the one or more logical channels herein is different from a concept of the at least one logical channel corresponding to the first data, and the at least one logical channel corresponding to the first data is one or more of the logical channels established by the network device for the terminal. For example, the logical channels established by the network device for the terminal include 10 logical channels, and the at least one logical channel corresponding to the first data is some or all of the 10 logical channels.

Step 310: The terminal receives the logical channel configuration information from the network device.

It should be noted that, usually, step 309 is performed before step 301. An execution sequence of step 309 and step 301 is not limited in this embodiment of this application. To be specific, step 301 may be performed before step 309, or step 309 may be performed before step 301, or step 301 and step 309 may be simultaneously performed.

After step 310, the communications method provided in this embodiment of this application further includes step 311.

Step 311: The terminal determines, based on at least one of the quality of service QoS information or the service type information corresponding to the one or more logical channels, whether a service corresponding to data of the one or more logical channels is the service transmitted at the MAC layer in the transparent transmission mode.

In an implementation, a protocol specifies which services corresponding to the QoS information are in a transparent transmission mode and/or which services corresponding to the service type information are in a transparent transmission mode. One logical channel is used as an example. After receiving the logical channel configuration information, the terminal determines, based on QoS information of the logical channel, whether the QoS information is QoS information corresponding to a service that is in a transparent transmission mode and that is specified in the protocol. If the QoS information is the QoS information corresponding to the service that is in the transparent transmission mode and that is specified in the protocol, the terminal determines that a service corresponding to data of the logical channel is the service transmitted at the MAC layer in the transparent transmission mode; or if the QoS information is not the QoS information corresponding to the service that is in the transparent transmission mode and that is specified in the protocol, the terminal determines that a service corresponding to data of the logical channel is not the service transmitted at the MAC layer in the transparent transmission mode. Similarly, the terminal determines, based on service type information of the logical channel, whether a service corresponding to data of the logical channel is the service transmitted at the MAC layer in the transparent transmission mode.

It should be noted that an execution sequence of step 311 and step 301 is not limited in this embodiment of this application. To be specific, step 301 may be performed before step 311, or step 311 may be performed before step 301, or step 301 and step 311 may be simultaneously performed.

With reference to the communications method corresponding to the first implementation shown in FIG. 4, the resource attribute of the first time-frequency resource includes that the first time-frequency resource is the semi-persistent time-frequency resource, that is, it is determined, based on the first indication information, that the first time-frequency resource is the semi-persistent time-frequency resource. With reference to step 311, when the terminal determines that a service corresponding to data of a second logical channel in the one or more logical channels is the service transmitted at the MAC layer in the transparent transmission mode, the first data includes the data of the second logical channel, and the first data does not include packet header information.

With reference to the communications method corresponding to the first implementation shown in FIG. 4, the resource attribute of the first time-frequency resource includes that the first time-frequency resource is the dynamic time-frequency resource, that is, it is determined, based on the first indication information, that the first time-frequency resource is the dynamic time-frequency resource. With reference to step 311, when the terminal determines that a service corresponding to data of a second logical channel in the one or more logical channels is not the service transmitted at the MAC layer in the transparent transmission mode, the first data includes the data of the second logical channel, and the first data includes packet header information.

With reference to the communications method corresponding to the second implementation shown in FIG. 7, the resource attribute of the first time-frequency resource includes that the first time-frequency resource is the transparent transmission resource, that is, the second indication information indicates that the first time-frequency resource is the transparent transmission resource. With reference to step 311, when the terminal determines that a service corresponding to data of a second logical channel in the one or more logical channels is the service transmitted at the MAC layer in the transparent transmission mode, the first data includes the data of the second logical channel, and the first data does not include packet header information.

With reference to the communications method corresponding to the second implementation shown in FIG. 7, the resource attribute of the first time-frequency resource includes that the first time-frequency resource is the non-transparent transmission time-frequency resource, that is, the second indication information indicates that the first time-frequency resource is the non-transparent transmission resource. With reference to step 311, when the terminal determines that a service corresponding to data of a second logical channel in the one or more logical channels is not the service transmitted at the MAC layer in the transparent transmission mode, the first data includes the data of the second logical channel, and the first data includes packet header information.

In conclusion, in this embodiment of this application, when the terminal performs data encapsulation based on the resource attribute of the first time-frequency resource, the terminal may determine, based on the QoS information corresponding to the logical channel and/or the service type information corresponding to the logical channel, whether the service corresponding to the data of the logical channel is the service transmitted at the MAC layer in the transparent transmission mode. When the first time-frequency resource is the semi-persistent resource or the transparent transmission resource, for a logical channel corresponding to the service transmitted at the MAC layer in the transparent transmission mode, the terminal encapsulates data of the logical channel in a single MAC PDU, and the MAC PDU does not include packet header information. In this way, for services of different QoS or services of different types, quality of service of the services can be ensured, and data transmission efficiency can be improved.

In a possible implementation, the logical channel configuration information received by the terminal further includes at least one of data encapsulation attribute information or data transmission attribute information corresponding to the at least one logical channel.

Data encapsulation attribute information corresponding to each logical channel is used to indicate whether data of the logical channel and data of another logical channel are allowed to be encapsulated in a single MAC PDU, and data transmission attribute information corresponding to each logical channel is used to indicate whether a transmission mode of data of the logical channel is a transparent transmission mode or a non-transparent transmission mode.

With reference to the communications method corresponding to the first implementation shown in FIG. 4, the resource attribute of the first time-frequency resource includes that the first time-frequency resource is the semi-persistent time-frequency resource, that is, it is determined, based on the first indication information, that the first time-frequency resource is the semi-persistent time-frequency resource; and when the terminal determines that data encapsulation attribute information corresponding to a third logical channel in the one or more logical channels indicates that data of the third logical channel and data of another logical channel are not allowed to be encapsulated in a single MAC PDU, the first data includes the data of only the third logical channel, and the first data does not include the packet header information; and/or when data transmission attribute information corresponding to a third logical channel indicates that a transmission mode of the data of the third logical channel is a transparent transmission mode, the first data includes the data of only the third logical channel, and the first data does not include the packet header information.

With reference to the communications method corresponding to the first implementation shown in FIG. 4, the resource attribute of the first time-frequency resource includes that the first time-frequency resource is the dynamic time-frequency resource, that is, it is determined, based on the first indication information, that the first time-frequency resource is the dynamic time-frequency resource; and when the terminal determines that data encapsulation attribute information corresponding to each of the at least one logical channel (the at least one logical channel belongs to the one or more logical channels) indicates that data of the logical channel and data of another logical channel are allowed to be encapsulated in a single MAC PDU, the first data includes the data of the at least one logical channel, and the first data includes the packet header information; and/or when the terminal determines that data encapsulation attribute information corresponding to each of the at least one logical channel indicates that data of the logical channel and data of another logical channel are allowed to be encapsulated in a single MAC PDU, the first data includes the data of the at least one logical channel, and the first data includes the packet header information.

With reference to the communications method corresponding to the second implementation shown in FIG. 7, the resource attribute of the first time-frequency resource includes that the first time-frequency resource is the transparent transmission resource, that is, the second indication information indicates that the first time-frequency resource is the transparent transmission resource; and when the terminal determines that data encapsulation attribute information of a second logical channel in the one or more logical channels indicates that data of the second logical channel and data of another logical channel are not allowed to be encapsulated in a single MAC PDU, the first data includes the data of only the second logical channel, and the first data does not include the packet header information; and/or when the terminal determines that data transmission attribute information of a second logical channel in the one or more logical channels indicates that a transmission mode of data of the second logical channel is a transparent transmission mode, the first data includes the data of only the second logical channel, and the first data does not include the packet header information.

With reference to the communications method corresponding to the second implementation shown in FIG. 7, the resource attribute of the first time-frequency resource includes that the first time-frequency resource is the non-transparent transmission resource, that is, the second indication information indicates that the first time-frequency resource is the non-transparent transmission resource; and when data encapsulation attribute information corresponding to each of the at least one logical channel (the at least one logical channel belongs to the one or more logical channels) indicates that data of the logical channel and data of another logical channel are allowed to be encapsulated in a single MAC PDU, the first data includes the data of the at least one logical channel, and the first data includes the packet header information; and/or when data transmission attribute information corresponding to each of the at least one logical channel indicates that a transmission mode of data of the logical channel is a non-transparent transmission mode, the first data includes the data of the at least one logical channel, and the first data includes the packet header information.

In a possible implementation, the logical channel configuration information received by the terminal includes data encapsulation attribute information corresponding to some of the one or more logical channels or data transmission attribute information corresponding to some of the one or more logical channels. Data encapsulation attribute information of each of the some logical channels is used to indicate that data of the logical channel and data of another logical channel are not allowed to be encapsulated in a single MAC PDU, and data transmission attribute information of each of the some logical channels is used to indicate that a transmission mode of data of the logical channel is a transparent transmission mode.

With reference to the communications method corresponding to the first implementation shown in FIG. 4, the resource attribute of the first time-frequency resource includes that the first time-frequency resource is the semi-persistent time-frequency resource, that is, it is determined, based on the first indication information, that the first time-frequency resource is the semi-persistent time-frequency resource; and the first data includes data of only a third logical channel, and the first data does not include packet header information. The third logical channel is one of the some logical channels (that is, the some logical channels in the foregoing logical channel configuration information).

With reference to the communications method corresponding to the first implementation shown in FIG. 4, the resource attribute of the first time-frequency resource includes that the first time-frequency resource is the dynamic time-frequency resource, that is, it is determined, based on the first indication information, that the first time-frequency resource is the dynamic time-frequency resource; and the first data includes the data of the at least one logical channel, and the first data includes packet header information. The at least one logical channel does not include the some logical channels.

With reference to the communications method corresponding to the second implementation shown in FIG. 7, the resource attribute of the first time-frequency resource includes that the first time-frequency resource is the transparent transmission resource, that is, the second indication information indicates that the first time-frequency resource is the transparent transmission resource; and the first data includes data of only a third logical channel, and the first data does not include packet header information. The third logical channel is one of the some logical channels (that is, the some logical channels in the logical channel configuration information).

With reference to the communications method corresponding to the second implementation shown in FIG. 7, the resource attribute of the first time-frequency resource includes that the first time-frequency resource is the non-transparent transmission resource, that is, the second indication information indicates that the first time-frequency resource is the non-transparent transmission resource; and the first data includes data of at least one logical channel, and the first data includes packet header information. The at least one logical channel does not include the some logical channels.

Optionally, the terminal first determines, based on a fact that the first time-frequency resource is the non-transparent transmission resource, at least one logical channel that matches an attribute of the non-transparent transmission resource, that is, selects, from all logical channels of the terminal, at least one logical channel whose data transmission attribute information of the logical channel is a non-transparent transmission mode; and then performs data encapsulation on data of the determined at least one logical channel based on constraints of priority information and/or a PBR of the logical channel, to generate the first data.

In a possible implementation, the logical channel configuration information received by the terminal includes only data encapsulation attribute information corresponding to one logical channel or data transmission attribute information corresponding to one logical channel. The data encapsulation attribute information of the logical channel is used to indicate that data of the logical channel and data of another logical channel are not allowed to be encapsulated in a single MAC PDU, and the data transmission attribute information of the logical channel is used to indicate that a transmission mode of data of the logical channel is a transparent transmission mode. It is determined, based on the first indication information, that the first time-frequency resource is the semi-persistent time-frequency resource, or it is determined, based on the second indication information, that the first time-frequency resource is the transparent transmission resource; and the first data includes the data of only the logical channel, and the first data does not include packet header information. It is determined, based on the first indication information, that the first time-frequency resource is the dynamic time-frequency resource, or it is determined, based on the second indication information, that the first time-frequency resource is the non-transparent transmission resource; and the first data includes data of at least one logical channel, and the first data includes packet header information. The at least one logical channel does not include the logical channel.

According to the communications method provided in this embodiment of this application, for a logical channel whose data encapsulation attribute is that data of one logical channel and data of another logical channel are not allowed to be encapsulated in a single MAC PDU, and/or for a logical channel whose logical channel attribute is that a data transmission mode is a transparent transmission mode, the terminal encapsulates data of the logical channel in a single MAC PDU, and the MAC PDU does not include packet header information. In this way, overheads of transmitting data of a logical channel with a specific channel attribute can be effectively reduced, and data transmission efficiency can be improved.

Optionally, in another possible implementation, it may be agreed on in a protocol that, for a logical channel for which neither a data encapsulation attribute or a data transmission attribute is configured, data of the logical channel is allowed to be encapsulated in a non-transparent transmission resource or a dynamic time-frequency resource by default.

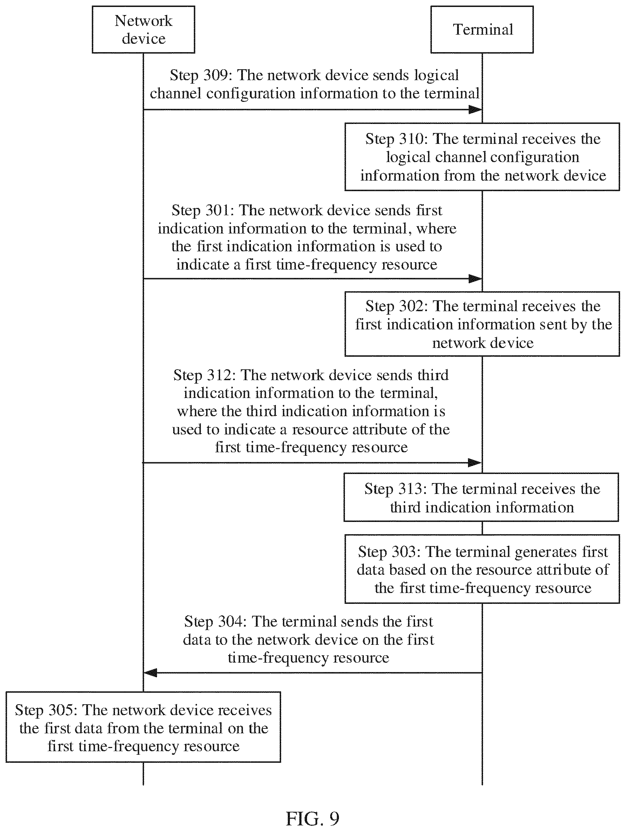

Optionally, with reference to FIG. 8, as shown in FIG. 9, after step 309 and before step 303, the communications method provided in this embodiment of this application further includes step 312 and step 313.

Step 312: The network device sends third indication information to the terminal, where the third indication information is used to indicate the resource attribute of the first time-frequency resource.

The resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource.

Similar to the foregoing second indication information, the third indication information may be carried in RRC signaling, a PCCH, or a management frame. Details are not described herein again.

Optionally, the third indication information and the first indication information are carried in same RRC signaling.

Step 313: The terminal receives the third indication information.

It should be noted that an execution sequence of step 301 and step 313 is not limited in this embodiment of this application. To be specific, step 301 may be performed before step 313, or step 313 may be performed before step 301, or step 301 and step 313 may be simultaneously performed.

Optionally, if the resource attribute of the first time-frequency resource includes the logical channel identifier corresponding to the first time-frequency resource, that is, the third indication information indicates that the resource attribute of the first time-frequency resource is the logical channel identifier corresponding to the first time-frequency resource, the first data includes data of only a second logical channel, and the first data does not include packet header information. The second logical channel is a logical channel indicated by the logical channel identifier corresponding to the first time-frequency resource, and the one or more logical channels include the second logical channel.

Optionally, if the resource attribute of the first time-frequency resource includes the QoS information of the transmitted logical channel corresponding to the first time-frequency resource, that is, the third indication information indicates that the resource attribute of the first time-frequency resource is the QoS information of the transmitted logical channel corresponding to the first time-frequency resource, the first data includes data of only a second logical channel, and the first data does not include packet header information. The second logical channel is a logical channel indicated by the QoS information of the transmitted logical channel corresponding to the first time-frequency resource, and the one or more logical channels include the second logical channel.

Optionally, if the resource attribute of the first time-frequency resource includes the service type information of the transmitted logical channel corresponding to the first time-frequency resource, that is, the third indication information indicates that the resource attribute of the first time-frequency resource is the service type information of the transmitted logical channel corresponding to the first time-frequency resource, the first data includes data of only a second logical channel, and the first data does not include packet header information. The second logical channel is a logical channel indicated by the service type information of the transmitted logical channel corresponding to the first time-frequency resource, and the one or more logical channels include the second logical channel.

According to the communications method provided in this embodiment of this application, for a logical channel indicated by at least one of the logical channel identifier corresponding to the first time-frequency resource, the QoS information of the transmitted logical channel corresponding to the first time-frequency resource, or the service type information of the transmitted logical channel corresponding to the first time-frequency resource, the terminal encapsulates data of the logical channel in a single MAC PDU, and the MAC PDU does not include packet header information. In this way, overheads of transmitting data of a logical channel with a specific characteristic can be effectively reduced, data transmission efficiency can be improved, and quality of service of the services can be ensured.

In a feasible implementation, for a video picture service, different logical channels may be established for different frames of the video picture service, for example, an I-frame, that is, an intra-coded picture (intra-coded picture), a P-frame, that is, a predictive-coded picture (predictive-coded picture), and a B-frame, that is, a bidirectionally predicted picture (bidirectionally predicted picture), to encapsulate data of different picture frames of the video picture service, so as to ensure differentiated data requirements.

In another feasible implementation, for a video picture service using scalable video coding, data at different layers, for example, a base layer (Layer 0) and an enhancement layer (Layer 1), is usually generated through coding. For the video picture service using scalable video coding, different logical channels may be established for picture frames at different layers, to encapsulate data of different picture frames of the video picture service, so as to meet differentiated data requirements.

It may be understood that, certainly, different service type information or QoS information may also be allocated to different frames of a video picture service or data at different layers, to implement data encapsulation, so as to ensure differentiated data requirements.

The communications method provided in embodiments of this application may be performed by a communications apparatus. The communications apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

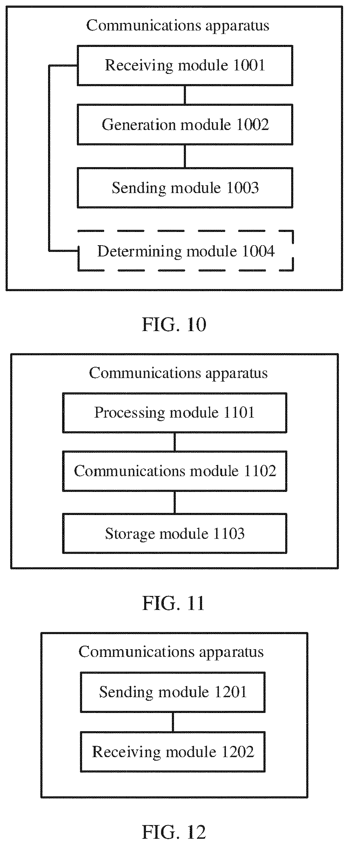

When each functional module is obtained through division based on each corresponding function, FIG. 10 is a possible schematic diagram of a structure of a communications apparatus related to the foregoing embodiments. As shown in FIG. 10, the communications apparatus may include a receiving module 1001, a generation module 1002, and a sending module 1003. The receiving module 1001 is configured to receive first indication information, where the first indication information is used to indicate a first time-frequency resource. For example, the receiving module 1001 is configured to support the communications apparatus in performing step 302 in the foregoing method embodiment. The generation module 1002 is configured to generate first data based on a resource attribute of the first time-frequency resource. For example, the generation module 1002 is configured to support the communications apparatus in performing step 303 in the foregoing method embodiment. The sending module 1003 is configured to send the first data to a network device on the first time-frequency resource. For example, the sending module 1003 is configured to support the communications apparatus in performing step 304 in the foregoing method embodiment.

Optionally, as shown in FIG. 10, the communications apparatus provided in this embodiment of this application further includes a determining module 1004. The determining module 1004 is configured to determine the resource attribute of the first time-frequency resource based on the first indication information, where the resource attribute of the first time-frequency resource includes that the first time-frequency resource is a semi-persistent time-frequency resource or the first time-frequency resource is a dynamic time-frequency resource. For example, the determining module 1004 is configured to support the communications apparatus in performing step 306 in the foregoing method embodiment.

Optionally, the receiving module 1001 is further configured to receive second indication information, where the second indication information is used to indicate the resource attribute of the first time-frequency resource, and the resource attribute of the first time-frequency resource includes that the first time-frequency resource is a transparent transmission resource or the first time-frequency resource is a non-transparent transmission resource. For example, the receiving module 1001 is configured to support the communications apparatus in performing step 308 in the foregoing method embodiment.

Optionally, the receiving module 1001 is further configured to receive logical channel configuration information from the network device, where the logical channel configuration information includes at least one of a logical channel identifier, quality of service QoS information, or service type information corresponding to one or more logical channels. For example, the receiving module 1001 is configured to support the communications apparatus in performing step 310 in the foregoing method embodiment.

Optionally, the logical channel configuration information further includes at least one of data encapsulation attribute information or data transmission attribute information corresponding to at least one logical channel.

Optionally, the determining module 1004 is further configured to determine, based on at least one of the quality of service QoS information or the service type information corresponding to the one or more logical channels, whether a service corresponding to data of the one or more logical channels is a service transmitted at a MAC layer in a transparent transmission mode. For example, the determining module 1004 is configured to support the communications apparatus in performing step 311 in the foregoing method embodiment.

Optionally, the receiving module 1001 is further configured to receive third indication information, where the third indication information is used to indicate the resource attribute of the first time-frequency resource, where the resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource. For example, the receiving module 1001 is configured to support the communications apparatus in performing step 313 in the foregoing method embodiment.

All related content of the steps in the foregoing method embodiments may be cited in function descriptions of the corresponding functional modules. Details are not described herein again.

When an integrated unit is used, FIG. 11 is a possible schematic diagram of a structure of a communications apparatus related to the foregoing embodiments. As shown in FIG. 11, the communications apparatus may include a processing module 1101 and a communications module 1102. The processing module 1101 may be configured to: control and manage an action of the communications apparatus. The processing module 1101 is an integrated module of the generation module 1002 and the determining module 1004. For example, the processing module 1101 is configured to: support the communications apparatus in performing step 303, step 306, and step 311 in the foregoing method embodiments, and/or perform another process of the technology described in this specification. The communications module 1102 is configured to support the communications apparatus in communicating with another network entity. The communications module 1102 is an integrated module of the receiving module 1001 and the sending module 1003. For example, the communications module 2002 is configured to support the communications apparatus in performing step 302, step 304, step 308, step 310, and step 313 in the foregoing method embodiments. Optionally, as shown in FIG. 11, the communications apparatus may further include a storage module 1103, configured to store program code and data of the communications apparatus and data of a logical channel.

The processing module 1101 may be a processor or a controller (for example, may be the processor 210 shown in FIG. 2), for example, may be a CPU, a general-purpose processor, a DSP, an ASIC, an FPGA, another programmable logic device, a transistor logic device, a hardware component, or any combination thereof. The processor may implement or execute various example logical blocks, modules, and circuits described with reference to content disclosed in embodiments of this application. The processor may be a combination of processors implementing a computing function, for example, a combination of one or more microprocessors, or a combination of a DSP and a microprocessor. The communications module 1102 may be a transceiver, a transceiver circuit, a communications interface, or the like (for example, may be the mobile communications module 250 or the wireless communications module 260 shown in FIG. 2). The storage module 1103 may be a memory (for example, may be the external memory 220 or the internal memory 221 shown in FIG. 2).

When the processing module 1101 is the processor, the communications module 1102 is the transceiver, and the storage module 1103 is the memory, the processor, the transceiver, and the memory may be connected through a bus. The bus may be a peripheral component interconnect (peripheral component interconnect, PCI) bus, an extended industry standard architecture (extended Industry standard architecture, EISA) bus, or the like. Buses may be classified into an address bus, a data bus, a control bus, and the like.

It should be noted that the apparatus embodiment described in FIG. 10 is merely an example. For example, division into the modules is merely logical function division and may be other division in an actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module. The foregoing modules in FIG. 10 may be implemented in a form of hardware, or may be implemented in a form of a software functional unit. For example, when software is used for implementation, the generation module 1002 and the determining module 1004 may be implemented by a software functional module generated after the processor 201 in FIG. 2 reads the program code stored in the memory. The foregoing modules in FIG. 10 may also be separately implemented by different hardware. For example, the generation module 1002 is implemented by some processing resources (for example, one or two cores in a multi-core processor) of the at least one processor 201 in FIG. 2, and the determining module 1004 is implemented by other processing resources (for example, other cores in the multi-core processor) in the at least one processor 201 in FIG. 2, or a programmable device such as an FPGA or a coprocessor. The receiving module 1001 and the sending module 1003 are implemented by the wireless communications module 260 in FIG. 2. It is clear that the foregoing functional modules may alternatively be implemented by a combination of software and hardware. For example, the generation module 1002 is implemented by a hardware programmable device, and the determining module 1004 is implemented by a software functional module generated after a CPU reads the program code stored in the memory.

When each functional module is obtained through division based on each corresponding function, FIG. 12 is a possible schematic diagram of a structure of a communications apparatus related to the foregoing embodiments. As shown in FIG. 12, the communications apparatus may include a sending module 1201 and a receiving module 1202. The sending module 1201 is configured to send first indication information to a terminal, where the first indication information is used to indicate a first time-frequency resource. For example, the sending module 1201 is configured to support the communications apparatus in performing step 301 in the foregoing method embodiment. The receiving module 1202 is configured to receive first data from the terminal on the first time-frequency resource. For example, the receiving module 1202 is configured to support the communications apparatus in performing step 305 in the foregoing method embodiment.

Optionally, the sending module 1201 is further configured to send second indication information to the terminal, where the second indication information is used to indicate a resource attribute of the first time-frequency resource, and the resource attribute of the first time-frequency resource includes that the first time-frequency resource is a transparent transmission resource or the first time-frequency resource is a non-transparent transmission resource. For example, the sending module 1201 is configured to support the communications apparatus in performing step 307 in the foregoing method embodiment.

Optionally, the sending module 1201 is further configured to send logical channel configuration information to the terminal, where the logical channel configuration information includes at least one of a logical channel identifier, quality of service QoS information, or service type information corresponding to one or more logical channels. For example, the sending module 1201 is configured to support the communications apparatus in performing step 309 in the foregoing method embodiment.

Optionally, the logical channel configuration information further includes at least one of data encapsulation attribute information or data transmission attribute information corresponding to at least one logical channel.

Optionally, the sending module 1201 is further configured to send third indication information to the terminal, where the third indication information is used to indicate the resource attribute of the first time-frequency resource, and the resource attribute of the first time-frequency resource includes at least one of the following: a logical channel identifier corresponding to the first time-frequency resource, QoS information of a transmitted logical channel corresponding to the first time-frequency resource, or service type information of the transmitted logical channel corresponding to the first time-frequency resource. For example, the sending module 1201 is configured to support the communications apparatus in performing step 312 in the foregoing method embodiment.

All related content of the steps in the foregoing method embodiments may be cited in function descriptions of the corresponding functional modules. Details are not described herein again.

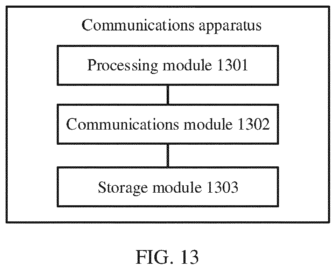

When an integrated unit is used, FIG. 13 is a possible schematic diagram of a structure of a communications apparatus related to the foregoing embodiments. As shown in FIG. 13, the communications apparatus may include a processing module 1301 and a communications module 1302. The processing module 1301 may be configured to: control and manage an action of the communications apparatus. The communications module 1302 is configured to support the communications apparatus in communicating with another network entity. The communications module 1302 is an integrated module of the receiving module 1202 and the sending module 1201. For example, the communications module 1302 is configured to support the communications apparatus in performing step 301, step 305, step 307, step 312, step 309, and step 308 in the foregoing method embodiment. Optionally, as shown in FIG. 13, the communications apparatus may further include a storage module 1303, configured to store program code and data of the communications apparatus and data of a logical channel.

The processing module 1301 may be a processor or a controller, for example, may be a CPU, a general-purpose processor, a DSP, an ASIC, an FPGA, another programmable logic device, a transistor logic device, a hardware component, or any combination thereof. The processor may implement or execute various example logical blocks, modules, and circuits described with reference to content disclosed in embodiments of this application. The processor may be a combination of processors implementing a computing function, for example, a combination of one or more microprocessors, or a combination of a DSP and a microprocessor. The communications module 1302 may be a transceiver, a transceiver circuit, a communications interface, or the like. The storage module 1303 may be a memory.

When the processing module 1301 is the processor, the communications module 1302 is the transceiver, and the storage module 1303 is the memory, the processor, the transceiver, and the memory may be connected through a bus. The bus may be a PCI bus, an EISA bus, or the like. Buses may be classified into an address bus, a data bus, a control bus, and the like.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communications method, comprising:
receiving first indication information sent by a network device, wherein the first indication information is used to indicate a first time-frequency resource;
generating first data based on a resource attribute of the first time-frequency resource, wherein the first data comprises data of at least one logical channel; and
sending the first data to the network device on the first time-frequency resource.

2. The method according to claim 1, wherein before the generating first data based on a resource attribute of the first time-frequency resource, the method further comprises:
determining the resource attribute of the first time-frequency resource based on the first indication information, wherein the resource attribute of the first time-frequency resource comprises that the first time-frequency resource is a semi-persistent time-frequency resource or the first time-frequency resource is a dynamic time-frequency resource.

3. The method according to claim 2, wherein
the resource attribute of the first time-frequency resource comprises that the first time-frequency resource is the semi-persistent time-frequency resource; and
the first data does not comprise packet header information.

4. The method according to claim 3, wherein
the first data comprises data of only a first logical channel.

5. The method according to claim 2, wherein
the resource attribute of the first time-frequency resource comprises that the first time-frequency resource is the dynamic time-frequency resource; and
the first data comprises packet header information.

6. The method according to claim 1, wherein before the generating first data based on a resource attribute of the first time-frequency resource, the method further comprises:
receiving second indication information, wherein the second indication information is used to indicate the resource attribute of the first time-frequency resource, and the resource attribute of the first time-frequency resource comprises that the first time-frequency resource is a transparent transmission resource or the first time-frequency resource is a non-transparent transmission resource.

7. The method according to claim 6, wherein
the resource attribute of the first time-frequency resource comprises that the first time-frequency resource is the transparent transmission resource; and
the first data does not comprise packet header information.

8. The method according to claim 7, wherein
the first data comprises data of only a first logical channel.

9. The method according to claim 6, wherein
the resource attribute of the first time-frequency resource comprises that the first time-frequency resource is the non-transparent transmission resource; and
the first data comprises packet header information.

10. The method according to claim 4 or 8, wherein a service corresponding to the data of the first logical channel is a service transmitted at a media access control MAC layer in a transparent transmission mode.

11. The method according to claim 4 or 8, wherein
the data of the first logical channel comprises data corresponding to an active noise reduction service.

12. The method according to any one of claims 1 to 11, wherein before the generating first data based on a resource attribute of the first time-frequency resource, the method further comprises:
receiving logical channel configuration information from the network device, wherein the logical channel configuration information comprises at least one of quality of service QoS information or service type information corresponding to one or more logical channels.

13. The method according to claim 12, wherein the method further comprises:
determining, based on the at least one of the quality of service QoS information or the service type information corresponding to the one or more logical channels, whether a service corresponding to data of the one or more logical channels is the service transmitted at the MAC layer in the transparent transmission mode.

14. The method according to claim 13, wherein the one or more logical channels comprise a second logical channel; and
the resource attribute of the first time-frequency resource comprises that the first time-frequency resource is the semi-persistent time-frequency resource; and when a service corresponding to data of the second logical channel is the service transmitted at the MAC layer in the transparent transmission mode, the first data comprises the data of the second logical channel, and the first data does not comprise the packet header information; or
the resource attribute of the first time-frequency resource comprises that the first time-frequency resource is the transparent transmission resource; and when a service corresponding to data of the second logical channel is the service transmitted at the MAC layer in the transparent transmission mode, the first data comprises the data of the second logical channel, and the first data does not comprise the packet header information.

15. The method according to claim 13, wherein the one or more logical channels comprise a second logical channel; and
the resource attribute of the first time-frequency resource comprises that the first time-frequency resource is the dynamic time-frequency resource; and when a service corresponding to data of the second logical channel is not the service transmitted at the MAC layer in the transparent transmission mode, the first data comprises the data of the second logical channel, and the first data comprises the packet header information; or
the resource attribute of the first time-frequency resource comprises that the first time-frequency resource is the non-transparent transmission time-frequency resource; and when a service corresponding to data of the second logical channel is not the service transmitted at the MAC layer in the transparent transmission mode, the first data comprises the data of the second logical channel, and the first data comprises the packet header information.

16. The method according to any one of claims 12 to 15, wherein
the logical channel configuration information further comprises at least one of data encapsulation attribute information or data transmission attribute information corresponding to the one or more logical channels, data encapsulation attribute information corresponding to each logical channel is used to indicate whether data of the logical channel and data of another logical channel are allowed to be encapsulated in a single media access control protocol data unit MAC PDU, and data transmission attribute information corresponding to each logical channel is used to indicate whether a transmission mode of data of the logical channel is a transparent transmission mode or a non-transparent transmission mode.

17. The method according to claim 16, wherein the one or more logical channels comprise a third logical channel, and the resource attribute of the first time-frequency resource comprises that the first time-frequency resource is the semi-persistent time-frequency resource; and
when data encapsulation attribute information corresponding to the third logical channel indicates that data of the third logical channel and data of another logical channel are not allowed to be encapsulated in a single MAC PDU, the first data comprises the data of only the third logical channel, and the first data does not comprise the packet header information; and/or
when data transmission attribute information corresponding to the third logical channel indicates that a transmission mode of the data of the third logical channel is a transparent transmission mode, the first data comprises the data of only the third logical channel, and the first data does not comprise the packet header information.

18. The method according to claim 16, wherein the resource attribute of the first time-frequency resource comprises that the first time-frequency resource is the dynamic time-frequency resource; and
when data encapsulation attribute information corresponding to each of the at least one logical channel indicates that data of the logical channel and data of another logical channel are allowed to be encapsulated in a single MAC PDU, the first data comprises the data of the at least one logical channel, and the first data comprises the packet header information; and/or
when data encapsulation attribute information corresponding to each of the at least one logical channel indicates that data of the logical channel and data of another logical channel are allowed to be encapsulated in a single MAC PDU, the first data comprises the data of the at least one logical channel, and the first data comprises the packet header information.

19. The method according to claim 16, wherein the one or more logical channels comprise the second logical channel, and the resource attribute of the first time-frequency resource comprises that the first time-frequency resource is the transparent transmission resource; and
when data encapsulation attribute information of the second logical channel indicates that the data of the second logical channel and data of another logical channel are not allowed to be encapsulated in a single MAC PDU, the first data comprises the data of only the second logical channel, and the first data does not comprise the packet header information; and/or
when data transmission attribute information of the second logical channel indicates that a transmission mode of the data of the second logical channel is a transparent transmission mode, the first data comprises the data of only the second logical channel, and the first data does not comprise the packet header information.

20. The method according to claim 16, wherein the resource attribute of the first time-frequency resource comprises that the first time-frequency resource is the non-transparent transmission resource; and
when data encapsulation attribute information corresponding to each of the at least one logical channel indicates that data of the logical channel and data of another logical channel are allowed to be encapsulated in a single MAC PDU, the first data comprises the data of the at least one logical channel, and the first data comprises the packet header information; and/or
when data transmission attribute information corresponding to each of the at least one logical channel indicates that a transmission mode of data of the logical channel is a non-transparent transmission mode, the first data comprises the data of the at least one logical channel, and the first data comprises the packet header information.

21. The method according to claim 1, wherein before the generating first data based on a resource attribute of the first time-frequency resource, the method further comprises:
receiving logical channel configuration information from the network device, wherein the logical channel configuration information comprises at least one of a logical channel identifier, quality of service QoS information, or service type information corresponding to the at least one logical channel; and
receiving third indication information, wherein the third indication information is used to indicate the resource attribute of the first time-frequency resource, and the resource attribute of the first time-frequency resource comprises at least one of the following: a logical channel identifier corresponding to the first time-frequency resource, QoS information of a transmitted logical channel corresponding to the first time-frequency resource, or service type information of the transmitted logical channel corresponding to the first time-frequency resource, wherein
if the resource attribute of the first time-frequency resource comprises the logical channel identifier corresponding to the first time-frequency resource, the first data comprises data of only a second logical channel, and the first data does not comprise packet header information, wherein the second logical channel is a logical channel indicated by the logical channel identifier corresponding to the first time-frequency resource, and one or more logical channels comprise the second logical channel;
if the resource attribute of the first time-frequency resource comprises the QoS information of the transmitted logical channel corresponding to the first time-frequency resource, the first data comprises data of only a second logical channel, and the first data does not comprise packet header information, wherein the second logical channel is a logical channel indicated by the QoS information of the transmitted logical channel corresponding to the first time-frequency resource; or
if the resource attribute of the first time-frequency resource comprises the service type information of the transmitted logical channel corresponding to the first time-frequency resource, the first data comprises data of only a second logical channel, and the first data does not comprise packet header information, wherein the second logical channel is a logical channel indicated by the service type information of the transmitted logical channel corresponding to the first time-frequency resource.

22. A communications apparatus, comprising a receiving module, a generation module, and a sending module, wherein
the receiving module is configured to receive first indication information sent by a network device, wherein the first indication information is used to indicate a first time-frequency resource;
the generation module is configured to generate first data based on a resource attribute of the first time-frequency resource, wherein the first data comprises data of at least one logical channel; and
the sending module is configured to send the first data to the network device on the first time-frequency resource.

23. The apparatus according to claim 22, wherein the apparatus further comprises a determining module, wherein
the determining module is configured to determine the resource attribute of the first time-frequency resource based on the first indication information, wherein the resource attribute of the first time-frequency resource comprises that the first time-frequency resource is a semi-persistent time-frequency resource or the first time-frequency resource is a dynamic time-frequency resource.

24. The apparatus according to claim 23, wherein
the resource attribute of the first time-frequency resource comprises that the first time-frequency resource is the semi-persistent time-frequency resource; and
the first data does not comprise packet header information.

25. The apparatus according to claim 24, wherein
the first data comprises data of only a first logical channel.

26. The apparatus according to claim 23, wherein
the resource attribute of the first time-frequency resource comprises that the first time-frequency resource is the dynamic time-frequency resource; and
the first data comprises packet header information.

27. The apparatus according to claim 22, wherein
the receiving module is further configured to receive second indication information, wherein the second indication information is used to indicate the resource attribute of the first time-frequency resource, and the resource attribute of the first time-frequency resource comprises that the first time-frequency resource is a transparent transmission resource or the first time-frequency resource is a non-transparent transmission resource.

28. The apparatus according to claim 27, wherein
the resource attribute of the first time-frequency resource comprises that the first time-frequency resource is the transparent transmission resource; and
the first data does not comprise packet header information.

29. The apparatus according to claim 28, wherein
the first data comprises data of only a first logical channel.

30. The apparatus according to claim 27, wherein
the resource attribute of the first time-frequency resource comprises that the first time-frequency resource is the non-transparent transmission resource; and
the first data comprises packet header information.

31. The apparatus according to claim 25 or 29, wherein
a service corresponding to the data of the first logical channel is a service transmitted at a media access control MAC layer in a transparent transmission mode.

32. The apparatus according to claim 25 or 29, wherein
the data of the first logical channel comprises data corresponding to an active noise reduction service.

33. The apparatus according to any one of claims 22 to 32, wherein
the receiving module is further configured to receive logical channel configuration information from the network device, wherein the logical channel configuration information comprises at least one of quality of service QoS information or service type information corresponding to one or more logical channels.

34. The apparatus according to claim 33, wherein
the determining module is further configured to determine, based on the at least one of the quality of service QoS information or the service type information corresponding to the one or more logical channels, whether a service corresponding to data of the one or more logical channels is the service transmitted at the MAC layer in the transparent transmission mode.

35. The apparatus according to claim 34, wherein the one or more logical channels comprise a second logical channel; and
the resource attribute of the first time-frequency resource comprises that the first time-frequency resource is the semi-persistent time-frequency resource; and when a service corresponding to data of the second logical channel is the service transmitted at the MAC layer in the transparent transmission mode, the first data comprises the data of the second logical channel, and the first data does not comprise the packet header information; or
the resource attribute of the first time-frequency resource comprises that the first time-frequency resource is the transparent transmission resource; and when a service corresponding to data of the second logical channel is the service transmitted at the MAC layer in the transparent transmission mode, the first data comprises the data of the second logical channel, and the first data does not comprise the packet header information.

36. The apparatus according to claim 34, wherein the one or more logical channels comprise a second logical channel; and
the resource attribute of the first time-frequency resource comprises that the first time-frequency resource is the dynamic time-frequency resource; and when a service corresponding to data of the second logical channel is not the service transmitted at the MAC layer in the transparent transmission mode, the first data comprises the data of the second logical channel, and the first data comprises the packet header information; or
the resource attribute of the first time-frequency resource comprises that the first time-frequency resource is the non-transparent transmission time-frequency resource; and when a service corresponding to data of the second logical channel is not the service transmitted at the MAC layer in the transparent transmission mode, the first data comprises the data of the second logical channel, and the first data comprises the packet header information.

37. The apparatus according to any one of claims 33 to 36, wherein
the logical channel configuration information further comprises at least one of data encapsulation attribute information or data transmission attribute information corresponding to the one or more logical channels, data encapsulation attribute information corresponding to each logical channel is used to indicate whether data of the logical channel and data of another logical channel are allowed to be encapsulated in a single media access control protocol data unit MAC PDU, and data transmission attribute information corresponding to each logical channel is used to indicate whether a transmission mode of data of the logical channel is a transparent transmission mode or a non-transparent transmission mode.

38. The apparatus according to claim 37, wherein the one or more logical channels comprise a third logical channel, and the resource attribute of the first time-frequency resource comprises that the first time-frequency resource is the semi-persistent time-frequency resource; and
when data encapsulation attribute information corresponding to the third logical channel indicates that data of the third logical channel and data of another logical channel are not allowed to be encapsulated in a single MAC PDU, the first data comprises the data of only the third logical channel, and the first data does not comprise the packet header information; and/or
when data transmission attribute information corresponding to the third logical channel indicates that a transmission mode of the data of the third logical channel is a transparent transmission mode, the first data comprises the data of only the third logical channel, and the first data does not comprise the packet header information.

39. The apparatus according to claim 37, wherein the resource attribute of the first time-frequency resource comprises that the first time-frequency resource is the dynamic time-frequency resource; and
when data encapsulation attribute information corresponding to each of the at least one logical channel indicates that data of the logical channel and data of another logical channel are allowed to be encapsulated in a single MAC PDU, the first data comprises the data of the at least one logical channel, and the first data comprises the packet header information; and/or
when data encapsulation attribute information corresponding to each of the at least one logical channel indicates that data of the logical channel and data of another logical channel are allowed to be encapsulated in a single MAC PDU, the first data comprises the data of the at least one logical channel, and the first data comprises the packet header information.

40. The apparatus according to claim 37, wherein the one or more logical channels comprise the second logical channel, and the resource attribute of the first time-frequency resource comprises that the first time-frequency resource is the transparent transmission resource; and
when data encapsulation attribute information of the second logical channel indicates that the data of the second logical channel and data of another logical channel are not allowed to be encapsulated in a single MAC PDU, the first data comprises the data of only the second logical channel, and the first data does not comprise the packet header information; and/or
when data transmission attribute information of the second logical channel indicates that a transmission mode of the data of the second logical channel is a transparent transmission mode, the first data comprises the data of only the second logical channel, and the first data does not comprise the packet header information.

41. The apparatus according to claim 37, wherein the resource attribute of the first time-frequency resource comprises that the first time-frequency resource is the non-transparent transmission resource; and
when data encapsulation attribute information corresponding to each of the at least one logical channel indicates that data of the logical channel and data of another logical channel are allowed to be encapsulated in a single MAC PDU, the first data comprises the data of the at least one logical channel, and the first data comprises the packet header information; and/or
when data transmission attribute information corresponding to each of the at least one logical channel indicates that a transmission mode of data of the logical channel is a non-transparent transmission mode, the first data comprises the data of the at least one logical channel, and the first data comprises the packet header information.

42. The apparatus according to claim 22, wherein
the receiving module is further configured to receive logical channel configuration information from the network device, wherein the logical channel configuration information comprises at least one of a logical channel identifier, quality of service QoS information, or service type information corresponding to the at least one logical channel; and the receiving module is further configured to receive third indication information, wherein the third indication information is used to indicate the resource attribute of the first time-frequency resource, and the resource attribute of the first time-frequency resource comprises at least one of the following: a logical channel identifier corresponding to the first time-frequency resource, QoS information of a transmitted logical channel corresponding to the first time-frequency resource, or service type information of the transmitted logical channel corresponding to the first time-frequency resource, wherein
if the resource attribute of the first time-frequency resource comprises the logical channel identifier corresponding to the first time-frequency resource, the first data comprises data of only a second logical channel, and the first data does not comprise packet header information, wherein the second logical channel is a logical channel indicated by the logical channel identifier corresponding to the first time-frequency resource, and one or more logical channels comprise the second logical channel;
if the resource attribute of the first time-frequency resource comprises the QoS information of the transmitted logical channel corresponding to the first time-frequency resource, the first data comprises data of only a second logical channel, and the first data does not comprise packet header information, wherein the second logical channel is a logical channel indicated by the QoS information of the transmitted logical channel corresponding to the first time-frequency resource; or
if the resource attribute of the first time-frequency resource comprises the service type information of the transmitted logical channel corresponding to the first time-frequency resource, the first data comprises data of only a second logical channel, and the first data does not comprise packet header information, wherein the second logical channel is a logical channel indicated by the service type information of the transmitted logical channel corresponding to the first time-frequency resource.

43. A terminal, comprising a memory and at least one processor connected to the memory, wherein
the memory is configured to store instructions, and after the instructions are read by the at least one processor, the terminal performs the method according to any one of claims 1 to 21.

44. A computer-readable storage medium, wherein the computer-readable storage medium comprises a computer program, and when the computer program is run on a computer, the method according to any one of claims 1 to 21 is performed.
